# EUROPEAN PATENT APPLICATION

(11) **EP 4 842 078 A1**
(43) Date of publication of application: **18.11.2026**
(21) Application number: 24916526.7
(22) Date of filing: 24.10.2024
(51) Int. Cl.: H04W 52/02

(54) **COMMUNICATION METHODS AND APPARATUSES**

(30) Priority: 10.01.2024 CN 202410043000
(71) Applicant: Huawei Technologies Co., Ltd., Shenzhen, Guangdong 518129 (CN)
(72) Inventor: LI, Lun, Shenzhen, Guangdong 518129 (CN); LI, Meng, Shenzhen, Guangdong 518129 (CN); WU, Yizhuang, Shenzhen, Guangdong 518129 (CN); ZHANG, Zhiqin, Shenzhen, Guangdong 518129 (CN)
(74) Representative: Huawei European IPR
(86) International application number: PCT/CN2024/127075
(87) International publication number: WO 2025/148475

(57) **Abstract**

This application provides a communication method and apparatus. The method includes: a first network element receiving a control policy from a second network element; and sending a first message to a network device according to the control policy, where the control policy is used to control the network device to transmit data of a terminal device. The control policy is determined based on a relationship between energy consumption of the network device used to transmit the data of the terminal device and a first energy consumption quota corresponding to the terminal device. The first energy consumption quota represents a maximum value of energy consumption allowed for the network device to transmit the data of the terminal device. The first message is used to request a reduction in energy consumption of the network device used to transmit the data of the terminal device. By enabling the network side to determine the control policy based on the relationship between the energy consumption of the network device used to transmit the data of the terminal device and the first energy consumption quota, and requesting the network device to reduce the energy consumption used to transmit the data of the terminal device based on the control policy, this can achieve policy control on data transmission of the terminal device by the network side based on energy consumption.

## Description

### CROSS-REFERENCE TO RELATED APPLICATIONS

This application claims priority to Chinese Patent Application No. 202410043000.3, filed with the China National Intellectual Property Administration of the People's Republic of China on January 10, 2024, and entitled "A Communication Method and Apparatus." which is incorporated herein by reference in its entirety.

### TECHNICAL FIELD

This application relates to the field of communications technologies, and in particular, to a communication method and apparatus.

### BACKGROUND

Currently, in response to climate change and global energy shortages, many countries and regions have introduced policies and requirements aimed at controlling carbon emissions and improving energy efficiency. These policies and requirements have made energy efficiency a strategic priority for many telecommunications operators around the world. For example, energy consumption has a significant impact on the operating costs of mobile network operators (mobile network operator, MNO)). Moreover, by analyzing the proportion of energy components used to power the network, it can be inferred that energy consumption may also have a certain impact on the environment.

In response to the above issues, the 3rd Generation Partnership Project (3rd generation partnership project, 3GPP) has begun conducting relevant research on energy conservation and efficiency. For example, 3GPP has conducted research on "specific services (such as services without quality of service (quality of service, QoS) standards))" based on energy-related subscriptions and policy control (policy control), in order to achieve control over energy usage and thus provide certain support for achieving energy conservation (energy saving, ES)). However, how to implement policy control over data transmission of terminal devices based on energy consumption still requires further research.

### SUMMARY

This application provides a communication method and apparatus, so as to implement policy control on data transmission of a terminal device by a network side based on energy consumption.

According to the first aspect, this application provides a communication method, where the method may be a first network element or a module of the first network element (for example, a processor, a processing unit, a chip, a chip system, or a circuit) Optionally, the method may also be implemented by a logical node, a logical module, or software that can implement all or some functions of the first network element. For example, the following uses an example in which the first network element performs the communication method. The method may include the following steps: The first network element receives a control policy from the second network element, and then the first network element may send a first message to the network device based on the control policy, where the control policy is used to control the network device to transmit data of the terminal device. The control policy is determined based on a relationship between energy consumption used by the network device to transmit the data of the terminal device. The first energy consumption quota indicates a maximum value of energy consumption allowed for the network device to transmit the data of the terminal device, and the first message is used to request to reduce the energy consumption used by the network device to transmit the data of the terminal device.

In this method, the network side determines the control policy based on the relationship between the first energy consumption quota corresponding to the terminal device and the energy consumption used by the network device to transmit the data of the terminal device, and requests, based on the control policy, the network device to reduce the energy consumption used for transmitting the data of the terminal device. In this way, the network side can perform policy control on data transmission of the terminal device based on energy consumption, and help reduce energy consumption caused by the terminal device on the network side to some extent.

According to the second aspect, a communication method is provided. The method may be a network device or a module of a network device (for example, a processor, a processing unit, a chip, a chip system, or a circuit) Optionally, the method may also be implemented by a logical node, a logical module, or software that can implement all or some functions of the network device. For example, the following uses an example in which the network device performs the communication method. The method may include the following steps: The network device receives a first message from the first network element, and then the network device may transmit the data of the terminal device based on a policy used by the network device to reduce energy consumption used by the network device to transmit the data of the terminal device, where the first message is used to request to reduce energy consumption used by the network device to transmit the data of the terminal device.

For the technical effects that can be achieved in the second aspect, please refer to the technical effects that can be achieved in the first aspect mentioned above. This will not be further elaborated here.

According to the third aspect, a communication method is provided. The method may be performed by a fourth network element or a module (for example, a processor, a processing unit, a chip, a chip system, or a circuit) of the fourth network element. Optionally, the method may also be implemented by a logical node, logical module, or software that can implement all or some functions of the fourth network element. For example, the following uses an example in which the fourth network element performs the communication method. The method may include the following steps: The fourth network element receives a seventh message from the first network element. Then, the fourth network element may send an eighth message to the first network element. The seventh message is used to request a first energy consumption quota, and the first energy consumption quota indicates a maximum value of energy consumption allowed for the network device to transmit data of the first session. The eighth message is used to indicate that the first energy consumption quota is greater than the remaining energy consumption quota corresponding to the terminal device, and the remaining energy consumption quota is the total energy consumption quota corresponding to the terminal device minus a second energy consumption quota of the network device used to transmit data of other sessions of the terminal device.

For the technical effects that can be achieved in the third aspect, please refer to the technical effects that can be achieved in the first aspect mentioned above. This will not be further elaborated here.

According to the fourth aspect, a communication method is provided. The method may be performed by a terminal device or a module of the terminal device (for example, a processor, a processing unit, a chip, a chip system, or a circuit)). Optionally, the method may also be implemented by a logical node, logical module, or software that can implement all or some functions of the terminal device. For example, the following uses an example in which the terminal device performs the communication method. The method may include the following steps: The terminal device receives a fifth message from a first network element. After that, the terminal device may update a data transmission policy of an application program based on a relationship between energy consumption used by the network device to transmit data of the terminal device and a first energy consumption quota corresponding to the terminal device. Alternatively, the terminal device may send a third message to the first network element based on a relationship between energy consumption used by the network device to transmit data of the terminal device and a first energy consumption quota corresponding to the terminal device, where the fifth message may include a relationship between energy consumption used by the network device to transmit data of the terminal device and the first energy consumption quota corresponding to the terminal device, and the first energy consumption quota indicates a maximum value of energy consumption allowed for the network device to transmit the data of the terminal device.

In this method, by being based on the fifth message, it is possible to directly and effectively adjust the data transmission policy of the terminal device. Alternatively, it can also enable the user to indicate, according to their own will, the network side to perform precise policy control. This helps make the policy control more personalized, which in turn helps achieve direct control over the terminal device. To a certain extent, this can also reduce the impact on the data transmission volume of the terminal device.

In a possible implementation of the first aspect, the second aspect, the third aspect, or the fourth aspect provided in this method, before the first network element receives the control policy from the second network element, the method further includes: the first network element sends a second message to the second network element based on a relationship between energy consumption of the network device for transmitting data and a first energy consumption quota corresponding to the terminal device. The second message is used to request the control policy.

In the implementation method described above, by sending the second message based on the relationship between the energy consumption of the network device for transmitting data and the first energy consumption quota corresponding to the terminal device, the sending of the second message can be made more accurate and reasonable. This helps avoid blindly (or incorrectly) sending the second message to the second network element. As a result, to a certain extent, the power consumption caused by blindly (or incorrectly) sending the second message can be reduced.

In a possible implementation provided in the first aspect, the second aspect, the third aspect, or the fourth aspect, the first network element sends the second message to the second network element, including: when the subscription information of the terminal device indicates that the terminal device supports policy control based on energy consumption, the first network element may send the second message to the second network element.

In the implementation method described above, when the terminal device supports policy control based on energy consumption, it can make the sending of the second message by the first network element more precise and more in line with actual needs. This can help avoid situations where a control policy is blindly requested, but the terminal device's data transmission cannot be controlled according to the policy.

In a possible implementation provided in the first aspect, the second aspect, the third aspect, or the fourth aspect, before the first network element sends the second message to the second network element, the method further includes: the first network element receives a third message from a terminal device, where the third message is used to indicate an update of a control policy.

In the implementation method described above, based on the third message, and in combination with the relationship between the energy consumption used by the network device to transmit the data of the terminal device and the first energy consumption quota corresponding to the terminal device, the sending of the second message by the second network element can be made more targeted, which helps avoid blindly (or incorrectly) sending the second message to the second network element. This can, to some extent, reduce the power consumption caused by blindly (or incorrectly) sending the second message.

In a possible implementation provided in the first aspect, the second aspect, the third aspect, or the fourth aspect, before the first network element receives a third message from a terminal device, the method further includes: the first network element receives a fourth message from a network device. After that, the first network element may send a fifth message to the terminal device based on the fourth message. The fourth message is used to determine the energy consumption of the network device for transmitting data, and the fifth message may include a relationship between the energy consumption of the network device for transmitting data corresponding to the terminal device and the first energy consumption quota corresponding to the terminal device.

In the implementation method described above, before the first network element receives a third message from a terminal device, the method further includes: the first network element receives a fourth message from a network device. After that, the first network element may send a fifth message to the terminal device based on the fourth message. The fourth message is used to determine the energy consumption of the network device for transmitting data, and the fifth message may include a relationship between the energy consumption of the network device for transmitting data corresponding to the terminal device and the first energy consumption quota corresponding to the terminal device.

In a possible implementation provided in the first aspect, the second aspect, the third aspect, or the fourth aspect, the relationship between the energy consumption used by the network device to transmit data of the terminal device and the first energy consumption quota corresponding to the terminal device includes: a difference between the first energy consumption quota and energy consumption is less than or equal to a first threshold.

In the foregoing implementation, when the first energy consumption quota is used up or is about to be used up, a corresponding control policy is requested from the second network element, so as to transmit the data of the terminal device according to the corresponding control policy. This helps reduce energy consumption used by the network device to transmit the data of the terminal device.

In a possible implementation of the first aspect, the second aspect, the third aspect, or the fourth aspect, the method further includes: receiving, by the first network element, subscription information of the terminal device from the third network element, where the subscription information includes the first energy consumption quota.

In a possible implementation of the first aspect, the second aspect, the third aspect, or the fourth aspect, the method further includes: receiving, by the first network element, a sixth message from the network device, where the sixth message is used to determine energy consumption used by the network device to transmit data of the terminal device.

In the implementation method described above, by determining the energy consumption based on the first energy consumption quota included in the subscription information and the sixth message, the difference between the first energy consumption quota and the energy consumption can be accurately calculated. This, in turn, allows for an accurate determination of whether the difference is less than or equal to the first threshold.

In a possible implementation of the first aspect, the second aspect, the third aspect, or the fourth aspect, when the data of the terminal device is the data of the first session of the terminal device, the relationship between the energy consumption of the network device used to transmit the data of the terminal device and the first energy consumption quota corresponding to the terminal device includes: the first energy consumption quota is greater than the energy consumption balance quota corresponding to the terminal device, wherein the energy consumption balance quota is the total energy consumption quota corresponding to the terminal device minus the second energy consumption quota of the network device used to transmit the data of other sessions of the terminal device.

In the implementation method described above, when the energy consumption balance quota is insufficient, a corresponding control policy is requested from the second network element, so that the network device can transmit the data of the terminal device according to the corresponding control policy. This helps reduce the energy consumption of the network device used to transmit the data of the terminal device.

In a possible implementation provided in the first aspect, the second aspect, the third aspect, or the fourth aspect, the method further includes: The first network element may send a seventh message to the fourth network element. After that, the first network element may receive an eighth message from the fourth network element, where the seventh message is used to request a first energy consumption quota, and the eighth message is used to indicate that the first energy consumption quota is greater than the remaining energy consumption quota corresponding to the terminal device.

In the implementation provided above, in the case where the first network element applies to the fourth network element for the first energy consumption quota, if the fourth network element determines that the remaining energy consumption quota corresponding to the terminal device is less than the first energy consumption quota, then the fourth network element may notify the first network element of the situation where the remaining energy consumption quota is insufficient, so that the first network element can promptly take corresponding measures to trigger the network device to reduce the energy consumption of the network device for transmitting data of the terminal device.

In a possible implementation provided in the first aspect, the second aspect, the third aspect, or the fourth aspect, the method further includes: The first network element may receive the updated first energy consumption quota. After that, the first network element may send a ninth message to the second network element based on the updated first energy consumption quota. The ninth message is used to request an update of the control policy.

In the foregoing implementation, when the first energy consumption quota is updated, the first network element may request the second network element to update the control policy. In this way, the network device may subsequently transmit terminal device data by using the new control policy, so that data transmission is more proper, and user experience is improved.

In a possible implementation of the first aspect, the second aspect, the third aspect, or the fourth aspect, the control policy includes a policy used to reduce energy consumption used by the network device to transmit data of the terminal device.

In the foregoing implementation, the network device may subsequently transmit the data of the terminal device based on the policy used by the network device to reduce energy consumption used by the network device to transmit the data of the terminal device. In this way, energy saving can be implemented for transmitting the data of the terminal device by the network device, thereby effectively reducing energy consumption for transmitting the data of the terminal device by the network device.

In a possible implementation of the first aspect, the second aspect, the third aspect, or the fourth aspect, the policy includes at least one of the following manners: reducing transmit power used by the network device to transmit data of the terminal device, reducing modulation complexity used by the network device to transmit data of the terminal device, reducing a quantity of retransmission times used by the network device to transmit data of the terminal device, reducing a transmission speed used by the network device to transmit data of the terminal device, or updating a data radio bearer used by the network device to transmit data of the terminal device.

In the implementation provided in the foregoing, by using one or more of the foregoing methods, a network device can transmit data of a terminal device in an energy-saving manner. This can effectively reduce the energy consumption of the network device when transmitting data of the terminal device.

In a possible implementation of the first aspect, the second aspect, the third aspect, or the fourth aspect provided in the foregoing, the data of the terminal device is user plane data of the terminal device.

In a possible implementation of the third aspect provided in the foregoing, the method further includes: sending, by the fourth network element, a tenth message to the third network element. After that, the fourth network element may receive subscription information of the terminal device from the third network element. The tenth message is used to query the subscription information of the terminal device, and the subscription information may include a total energy consumption quota corresponding to the terminal device.

In the implementation provided in the foregoing, by obtaining the total energy consumption quota from the third network element, it can be convenient for the fourth network element to accurately allocate corresponding energy consumption quotas for different sessions of the terminal device based on the total energy consumption quota. In addition, when the remaining energy consumption quota is insufficient, it can be convenient for the first network element to timely request the second network element for a corresponding control policy, so that the network device can transmit data of the terminal device according to the corresponding control policy. This helps reduce the energy consumption of the network device when transmitting data of the terminal device.

In a possible implementation manner provided in the third aspect, the method further includes: receiving, by the fourth network element, an updated total energy consumption quota from the third network element, and then the fourth network element may update the first energy consumption quota based on the updated total energy consumption quota; and then The fourth network element may send the updated first energy consumption quota to the first network element.

In the foregoing implementation, the updated first energy consumption quota can be accurately calculated based on the updated total energy consumption quota, which helps the first network element accurately request, from the second network element, a control policy matching the updated first energy consumption quota.

In a possible implementation provided in the fourth aspect, the data transmission policy includes at least one of the following manners: delaying an automatic update time of an application program or delaying a data synchronization time between the application program and the cloud.

In the foregoing implementation, one or more of the foregoing manners can be used, so that energy saving control for the terminal device can be implemented, and key services of the terminal device can be prevented from being affected to some extent because a busy-hour resource is occupied by an automatic update of an application program or data synchronization between the application program and the cloud.

According to the fifth aspect, this application provides a communication method. The method may be performed by a fifth network element or a module (for example, a processor, a processing unit, a chip, a chip system, or a circuit) of the fifth network element. Optionally, the method may also be implemented by a logical node, logical module, or software that can implement all or some functions of the fifth network element. For example, the following uses an example in which the fifth network element performs the communication method. The method may include the following steps: The fifth network element receives first information from a second network element. Then, the fifth network element may update a data transmission policy based on the first information. The first information is used to indicate a relationship between energy consumption of a network device used to transmit data of a terminal device and a first energy consumption quota corresponding to the terminal device. The data transmission policy is used to control the fifth network element to transmit the data of the terminal device.

In this method, by updating the data transmission policy corresponding to the terminal device based on the relationship between the energy consumption of the network device used to transmit the data of the terminal device and the first energy consumption quota corresponding to the terminal device, the energy consumption of the terminal device can be performed based on the energy consumption to implement energy-saving control on the terminal device. In addition, it can be implemented to make the data transmission content and data transmission amount corresponding to the terminal device be affected as little as possible to the greatest extent possible.

According to the sixth aspect, a communication method is provided. The method may be performed by a second network element or a module (for example, a processor, a processing unit, a chip, a chip system, or a circuit) of the second network element. Optionally, the method may also be implemented by a logical node, logical module, or software that can implement all or some functions of the second network element. For example, the following uses an example in which the second network element performs the communication method. The method may include the following steps: The second network element receives third information from the first network element. Then, the second network element may determine, based on the third information, session information associated with the terminal device, and may determine, based on the session information associated with the terminal device, a corresponding fifth network element. Then, the second network element may send the first information to the fifth network element, where the third information may be used to request a control policy corresponding to the terminal device, the third information may include a relationship between energy consumption used by the network device to transmit data of the terminal device and a first energy consumption quota corresponding to the terminal device, the first information is used to indicate the relationship between the energy consumption used by the network device to transmit the data of the terminal device and the first energy consumption quota corresponding to the terminal device, and the data transmission policy is used to control the fifth network element to transmit the data of the terminal device.

For the technical effects that can be achieved in the sixth aspect, please refer to the technical effects that can be achieved in the fifth aspect mentioned above. This will not be further elaborated here.

In a possible implementation provided in the fifth aspect or the sixth aspect, the method further includes: sending, by a fifth network element, second information to a terminal device, where the second information is used to indicate that a data transmission policy is updated due to an energy consumption reason.

In the implementation method described above, by sending second information to a terminal device, it can be facilitated for the terminal device to promptly learn the reason for the change in the data transmission policy.

In a possible implementation provided in the fifth aspect or the sixth aspect, the data transmission policy may include at least one of the following methods: updating a sending time of downlink data, adjusting a data synchronization time, or adjusting a streaming clarity of a cloud service, etc.

In a possible implementation provided in the fifth aspect or the sixth aspect, the data transmission policy may include at least one of the following methods: updating a sending time of downlink data, adjusting a data synchronization time, or adjusting a streaming clarity of a cloud service, etc.

According to the seventh aspect, this application further provides a communications apparatus. The communications apparatus can implement any one of the possible implementations of the method in any one of the first aspect to the sixth aspect. The communications apparatus may be implemented by hardware, or may be implemented by hardware executing corresponding software. The hardware or software includes one or more modules corresponding to the foregoing functions.

In a possible implementation, the communications apparatus includes corresponding functional modules, which are respectively configured to implement the corresponding functions of the first network element, the second network element, the third network element, the fourth network element, the fifth network element, the network device, or the terminal device in the method shown above. The functions may be implemented by hardware, or may be implemented by hardware executing corresponding software. The hardware or software includes one or more modules corresponding to the foregoing functions.

In a possible implementation, the communications apparatus includes corresponding functional modules, which are respectively configured to implement the steps in the method shown above. The functions may be implemented by hardware, or may be implemented by hardware executing corresponding software. The hardware or software includes one or more modules corresponding to the foregoing functions.

In a possible implementation, a structure of the communications apparatus includes a transceiver module and a processing module. These modules may perform corresponding functions in the foregoing method examples. For details, refer to descriptions in the method in any one of the first aspect to the sixth aspect. Details are not described herein again.

According to an eighth aspect, this application further provides a communications apparatus. The communications apparatus includes a processor and a communications interface. The communications interface is configured to: receive a signal from another communications apparatus other than the communications apparatus and transmit the signal to the processor, or send a signal from the processor to another communications apparatus other than the communications apparatus. The processor implements the method in any one of the possible implementations of the first aspect to the sixth aspect by using a logic circuit or executing a computer program or an instruction. Optionally, the communications apparatus further includes a memory, and the memory is configured to store a computer program or an instruction.

According to the ninth aspect, this application provides a communications system, where the communications system includes a plurality of communications apparatuses (for example, a plurality of the first network element, a second network element, a third network element, a fourth network element, a fifth network element, a network device, or a terminal device). For related function implementation of the first network element, the second network element, the third network element, the fourth network element, the fifth network element, the network device, or the terminal device, refer to the related descriptions mentioned in the first aspect, the second aspect, the third aspect, the fourth aspect, the fifth aspect, or the sixth aspect. Details are not described herein again.

According to the tenth aspect, this application provides a computer program product. The computer program product includes a computer program or instructions. When the computer program or instructions are run on a computer, the computer is enabled to perform the method in any one of the possible implementations of any one of the first aspect to the sixth aspect.

According to the eleventh aspect, this application provides a computer-readable storage medium. The computer-readable storage medium stores a computer program or instructions. When the computer program or instructions are executed by a computer, the computer is enabled to perform the method in any one of the possible implementations of any one of the first aspect to the sixth aspect.

According to the twelfth aspect, this application provides a chip. The chip may include a processor, and may further include a memory (or the chip is coupled to the memory). The chip executes program instructions in the memory, to perform the method in any one of the possible implementations of any one of the first aspect to the sixth aspect. Herein, "coupling" means that two components are directly or indirectly combined with each other. For example, coupling may refer to an electrical connection between two components.

According to the thirteenth aspect, this application further provides a chip system. The chip system includes a processor, configured to support a computer apparatus in implementing any one of the possible implementations of any one of the first aspect to the sixth aspect. In a possible implementation, the chip system further includes a memory, and the memory is configured to store a program and data that are necessary for the computer apparatus. The chip system may include a chip, or may include a chip and another discrete component.

Based on the implementations provided in the foregoing aspects, this application may further perform further combinations to provide more implementations.

### BRIEF DESCRIPTION OF DRAWINGS

FIG. 1 is a schematic diagram of a communication system architecture according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic flowchart of still another communication method according to an embodiment of this application;
FIG. 6 is a schematic flowchart of still another communication method according to an embodiment of this application;
FIG. 7 is a schematic flowchart of still another communication method according to an embodiment of this application.
FIG. 8 is a schematic flowchart of another communication method according to an embodiment of this application;
FIG. 9 is a schematic structural diagram of a communication apparatus according to an embodiment of this application;
FIG. 10 is a schematic structural diagram of another communication apparatus according to an embodiment of this application.

### DESCRIPTION OF EMBODIMENTS

Before introducing the technical solutions provided in this application, some terms used in this application are first explained and described, so that a person skilled in the art can understand.
(1) Network Data Analytics Function (network data analytics function, NWDAF): Mainly used for analyzing various types of network data. The sources of network data may include, but are not limited to, network operation data collected from network functions (network function, NF)), or statistics related to terminal devices and networks obtained from operation, administration, and maintenance (operation administration and maintenance, OAM)), or application data obtained from a third-party application function (application function, AF)). Accordingly, the analysis results generated by the NWDAF can also be output to the NF, OAM, or a third-party AF. Thereafter, the NF, OAM, or AF can utilize the analysis results of the NWDAF to perform various optimization operations.
(2) OAM: A collective term for a set of network management functions, including fault monitoring, fault reporting, fault localization, and fault repair. Generally, there is corresponding OAM on the access network side, which can be referred to as access network OAM. On the core network side, there is corresponding OAM, referred to as core network OAM. Different OAMs may have transmission interfaces between them. OAM can be the network element management system (element management system, EMS), or it can also be the network management system (network management system, NMS), manage authorization and execution (manage authorization and execution, MAE), or operations support system (operations support system, OSS)/business support system (business support system, BSS), or any other collection of management units.
(3) A protocol data unit (protocol data unit, PDU) session (session): a logical connection between a terminal device and a data network (data network, DN), and provides a user plane connection between the terminal device and the DN for the terminal device. The PDU session includes a session between a terminal device and an access network device, an access network device and a user plane function (user plane function, UPF) network element, and a session between a UPF network element and a DN. One PDU session includes at least one quality of service (quality of service, QoS) flow.

It should be noted that, in this embodiment of this application, "sending a message (or information)" may be understood as sending, by a device, a message (or information) to another device, or may be understood as sending, by a logical module in the device, a message (or information) to another logical module. For example, "sending a message by the first network element" may be understood as sending a message by the first network element to another device (for example, the second network element), or may be understood as sending a message by the logical module 1 in the first network element to the logical module 2 in the second network element.

In the embodiments of this application, "receiving a message (or information)" may be understood as a device receiving a message (or information) from another device. Alternatively, it may be understood as a logical module within the device receiving a message (or information) from another logical module. For example, "the first network element receives a message" may be understood as the first network element receiving a message from another device (for example, a second network element). Alternatively, it may be understood as logical module 1 in the first network element receiving a message from logical module 2 in the second network element.

In the embodiments of this application, "sending a message (or information) to a second network element" may be understood as the destination end of the message (or information) being the second network element. It may include directly or indirectly sending the message (or information) to the second network element. "Receiving a message (or information) from a second network element" may be understood as the source end of the message (or information) being the second network element. It may include directly or indirectly receiving the message (or information) from the second network element. The message (or information) may be subject to necessary processing, such as format changes, between the source end and the destination end of the message (or information). However, the destination end can understand the valid message from the source end. Similar expressions in the embodiments of this application can be understood in a similar manner, and details are not described herein again.

The following describes the embodiments of this application in detail with reference to the accompanying drawings.

The following describes a communications system architecture to which the communications method provided in this application is applicable. It should be noted that these descriptions are intended for ease of understanding by persons skilled in the art, and are not intended to limit the protection scope claimed in this application.

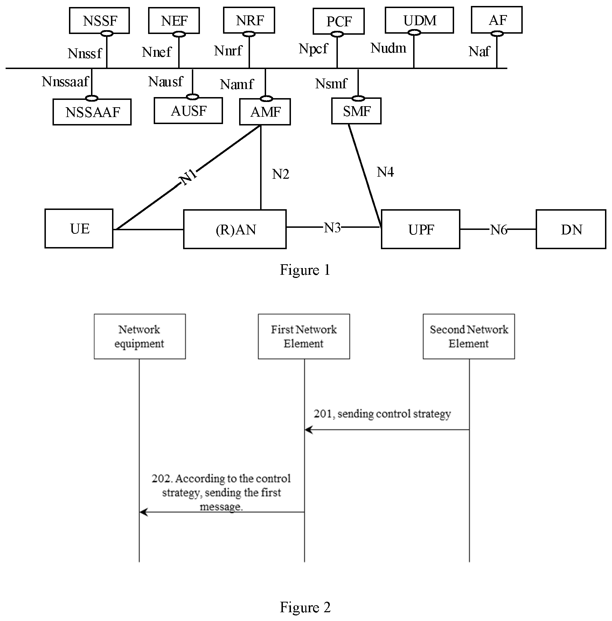

FIG. 1 is a schematic architectural diagram of a possible communications system applicable to an embodiment of this application. A communications system architecture shown in FIG. 1 is a 5th generation (5th-generation, 5G) communications system architecture formulated by a 3rd generation partnership project (3rd generation partnership project, 3GPP) standard, and the communications system architecture includes a terminal device (e.g., user equipment (UE))), access network (AN) (e.g., radio access network (RAN))), a core network (Core network, CN) and a data network. Optionally, the terminal device may be connected to an access network device (for example, an (R)AN device) in a wireless manner, and the access network device may be connected to a core network in a wireless or wired manner. The core network device and the radio access network device may be independent and different physical devices, or a function of the core network device and a logical function of the radio access network device may be integrated into the same physical device, or a part of functions of the core network device and a part of functions of the radio access network device may be integrated into one physical device. The terminal devices may be connected to each other in a wired or wireless manner, and the access network devices may be connected to each other in a wired or wireless manner. For example, the communications system architecture may further include other network devices (such as a wireless relay device or a wireless backhaul device).

The following briefly describes functions of some devices included in the communications system architecture.

A terminal device is an entity on the user side that has the function of sending and receiving signals, and can provide services such as video, voice, and data connectivity for the user. For example, the terminal device is an entry for interaction between a mobile user and a network, can provide a basic computing capability and a storage capability, can display a service window to the user, and can receive a user operation input. A next generation terminal device (NextGen UE) may establish a signal connection and a data connection with an access network device by using a new air interface technology, so as to transmit a control signal and service data to a mobile network.

Optionally, the terminal device may also be referred to as a terminal, user equipment (user equipment, UE), an access terminal device, an in-vehicle terminal, an industrial control terminal, a UE unit, a UE station, a mobile station, a mobile station (mobile station, MS), or a mobile terminal (mobile terminal, where MT), a remote station, a remote terminal device, a mobile device, a UE terminal device, a terminal device, a wireless communication device, a UE agent, a UE apparatus, and the like. In this embodiment of this application, the terminal device may be in a fixed location, or may be moving. This is not limited in this embodiment of this application. For example, the terminal device may be deployed on land, including indoors or outdoors, handheld, wearable, or vehicle-mounted, or may be deployed on water (such as a ship), or may be deployed in the air (such as an airplane, a balloon, or a satellite).

For example, the terminal device may be a mobile phone (mobile phone), a tablet computer (Pad), a subscriber unit (subscriber unit), a cellular phone (cellular phone), a smart phone (smart phone), a wireless data card, or a personal digital assistant (Personal) a digital assistant, a PDA computer, a wireless modem, a handset, a laptop computer, a computer with a wireless transceiver function, a virtual reality (virtual reality, VR) terminal device, and an augmented reality (augmented reality), AR) terminal device, a wireless terminal in industrial control, a vehicle-mounted terminal device, a wireless terminal in self driving, a wireless terminal in remote medical, a wireless terminal in smart grid, and a transport security (trans wireless terminal in transportation safety, wireless terminal in smart city, wireless terminal in smart home, wearable terminal device, vehicle, unmanned aerial vehicle, helicopter, aircraft, factory machine/device, machine type communication Communication, MTC) terminals, ships, robots, etc. For example, the vehicle may include but is not limited to a smart car (smart car or intelligent car), a digital car (digital car), and an unmanned car (unmanned car or driverless car or pilotless car or automobile), an automatic car (self-driving car or autonomous car), a pure electric vehicle (pure EV or battery EV), a hybrid electric vehicle (HEV), a range extended EV, REEV), plug-in hybrid vehicle (plug-in HEV, PHEV), new energy vehicle (new energy vehicle), etc. A specific technology and a specific device form used by the terminal device are not limited in this embodiment of this application.

An access network device is a device for connecting a terminal device to a wireless network. The access network device may also be referred to as an access network apparatus, a radio access network device, an (R)AN entity, a network device, an access node, an (R)AN node, an (R)AN device, or the like. For example, the access network device may provide a network access function for an authorized user in a specific area, and may determine transmission tunnels of different quality according to a user level, a service requirement, and the like to transmit user data. The access network device can manage resources of the access network device, properly utilize resources, provide access services for the terminal device as required, and forward control signals and user data between the terminal device and the core network.

For example, the access network device may include but is not limited to: a next generation NodeB (next generation NodeB, gNB) and a sixth generation (6th generation) in a 5th generation (5th generation, 5G) communications system. 6G) a next generation base station in a communications system, a base station in a future communications system, a transmission reception point (transmission reception point, TRP), an evolved Node B (evolved Node B, eNB), a radio network controller (radio network controller, RNC), a Node B (Node B, NB), a base station controller (BSC), a base transceiver station (base transceiver station, BTS), and a Femtocell (e.g., home evolved Node B, or home Node B, HNB), a base band unit (base band unit, BBU), a wireless fidelity (wireless fidelity, Wi-Fi) access point (access point, AP), or the like.

Optionally, in a certain network structure, the access network device may include a centralized unit (centralized unit, CU) or a distributed unit (distributed unit, DU). This structure can separate the protocol layers of the access network device. The functions of some protocol layers are placed in the CU for centralized control, while the functions of the remaining protocol layers or all protocol layers are distributed in the DU, and the CU centrally controls the DU. For example, the functions of the packet data convergence protocol (packet data convergence protocol, PDCP) layer and above can be set in the CU, while the functions of the protocol layers below the PDCP (for example, the RLC layer and the medium access control (medium access control, MAC) layer, etc.) can be set in the DU. It should be noted that this division of protocol layers is merely an example, and other protocol layers can also be divided. The radio frequency apparatus may be remotely placed, not placed in the DU, or may be integrated into the DU, or partially remotely placed and partially integrated into the DU. This is not limited in the embodiments of this application. In addition, in some embodiments, the control plane (control plan, CP) and the user plane (user plan, UP) of the CU may be separated, and implemented as different entities, which are respectively a control plane CU entity (CU-CP entity) and a user plane CU entity (CU-UP entity).

For example, taking the access network device as a base station, the base station may communicate with the terminal device, or may communicate with the terminal device through a relay station. The terminal device may communicate with multiple base stations in different access technologies.

In the embodiments of this application, the access network device may be a macro base station, or may be a micro base station, an indoor station, a relay node, or a donor node. The embodiments of this application do not limit the specific technology and specific device form used by the wireless access network device.

Data network: A data network that provides service for users. Generally, the client is located at the terminal device, and the server is located at the data network. The data network can be a private network, such as a local area network (LAN). It can also be an external network not controlled by an operator, such as the Internet. Alternatively, it can be a dedicated network jointly deployed by operators, such as a network providing IP multimedia network subsystem (IP multimedia core network subsystem, IMS) services.

Core network: maintains the subscription data of the mobile network, manages the network elements of the mobile network, and provides functions such as session management, mobility management, policy management, and security authentication for terminal devices. providing network access authentication for the terminal device when the terminal device attaches to the network; when the terminal device has a service request, allocating a network resource to the terminal device; and; updating a network resource for the terminal device when the terminal device moves; and; When the terminal device is idle, the fast recovery mechanism is provided for the terminal device. when the terminal device is detached, releasing a network resource for the terminal device; and; When the terminal device has service data, providing a data routing function for the terminal device, for example, forwarding uplink data to a data network; Alternatively, downlink data of the terminal device is received from a data network, and forwarded to the access network device, so that the access network device sends the downlink data to the terminal device. Optionally, in terms of functional logic, the network elements of the core network may be divided into two parts: a user plane network element and a control plane network element. The user plane network element is configured to transmit service data. For example, the user plane network element may include but is not limited to a UPF network element. The control plane network element is configured to manage a mobile network. For example, the control plane may include but is not limited to an access and mobility management function (access and mobility management function, AMF) network element, a session management function (session management function, SMF) network element, and unified data management (unified data management). a UDM network element, a policy control function (policy control function, PCF) network element, an AF network element, an authentication server function (authentication server function, AUSF) network element, and a network slice selection function (network slice selection function, NSSF) network element. Certainly, the core network may further include another network element (e.g., network exposure function (NEF)) a network element, a network function repository function (network function repository function, NRF) network element, a unified data repository (unified data repository, UDR) network element, a network slice selection authentication and authorization function (network slice-specific authentication and authorization function, NSSAAF) network element, and the like are not listed one by one herein.

Optionally, a core network control plane uses a service-based architecture, and interaction between control plane network element uses a service invoking manner, to replace a point-to-point communication manner in a conventional architecture. In the service-oriented architecture, the control plane NE opens services to other control plane NEs for other control plane NEs to invoke. In point-to-point communication, a communication interface between control plane network elements stores a specific set of messages, and the messages can be used only by control plane network elements at two ends of the interface during communication.

The following briefly describes functions of some network elements included in the core network.
(1) The SMF network element is mainly configured to manage sessions, allocate and manage an IP address of a terminal device, select a termination point that can manage a user equipment plane function, a policy control function interface, or a charging function interface, and notify downlink data, for example, completes communication with a protocol data unit (protocol data unit). Session establishment, release, and update procedures. In the 5G communications system, the session management network element may be an SMF network element. In future communications such as a sixth generation (6th-generation, 6G) communications system, the session management function network element may still be an SMF network element or have another name. This is not limited in this application. The Nsmf is a service-based interface provided by the SMF network element, and the SMF network element may communicate with another network function by using the Nsmf.
(2) AMF network element: Mainly used for mobility management, access management, etc. For example, it can receive non-access stratum (non-access stratum, NAS) signaling from terminal devices (including mobility management (mobility management, MM) signaling and session management (session management, SM) signaling)) and related signaling from access network devices (for example, base station granularity N2 signaling that interacts with the AMF network element)), to complete the user registration process, forward SM signaling, and perform mobility management. For example, it can be a mobility management entity (mobility management entity, MME)) in a 4th generation (4th-generation, 4G) communication system), or an AMF network element in a 5G communication system. In future communication systems, such as 6G communication systems, the access management network element may still be an AMF network element, or may have another name. This application does not impose any limitation thereto. Namf is a service-based interface provided by the AMF network element. The AMF network element may communicate with other network functions through Namf.
(3) UDM network element: Used to process user identifiers, subscriptions, access authentication, registration, or mobility management, etc. In a 5G communications system, the data management network element may be a UDM network element. In future communications systems, such as a 6G communications system, the data management network element may still be a UDM network element, or it may have another name. This application does not impose any limitations in this regard. Among them, Nudm is a service-based interface provided by the UDM network element. The UDM network element may communicate with other network functions through Nudm.
(4) PCF network element: Used to provide a unified policy framework for guiding network behavior. It provides policy rule information for control plane function network elements (such as AMF, SMF, etc.). This information includes policies related to mobility or PDU session policies (such as quality of service (quality of service, QoS) policies, charging policies, etc.) or slice selection policies, etc. In a 5G communications system, the policy control network element may be a PCF network element. In future communications systems, such as a 6G communications system, the policy control network element may still be a PCF network element, or it may have another name. This application does not impose any limitations in this regard. Among them, Npcf is a service-based interface provided by the PCF network element. The PCF network element may communicate with other network functions through Npcf.
(5) AF network element: Used for performing data routing with application impact, accessing network open functions, or interacting with the policy framework to perform policy control, etc. In a 5G communications system, the application network element may be an AF network element. In future communications systems, such as a 6G communications system, the application network element may still be an AF network element, or have another name. This application does not impose any limitations in this regard. Naf is a service-based interface provided by the AF network element. The AF network element may communicate with other network functions through Naf.
(6) UPF network element: Used for packet routing and forwarding, or QoS processing of user plane data, etc. In a 5G communications system, the user plane network element may be a UPF network element. In future communications systems, such as a 6G communications system, the user plane network element may still be a UPF network element, or have another name. This application does not impose any limitations in this regard.
(7) AUSF network element: Mainly used for user authentication, etc. In a 5G communications system, the authentication service network element may be an AUSF network element. In future communications systems, such as a 6G communications system, the authentication service network element may still be an AUSF network element, or have another name. This application does not impose any limitations in this regard. Nausf is a service-based interface provided by the AUSF network element. The AUSF network element may communicate with other network functions through Nausf.
(8) An NSSF network element is configured to select a network slice for the terminal device. In a 5G communications system, the network slice selection function network element may be an NSSF network element. In a future communications system such as a 6G communications system, the network slice selection function network element may still be an NSSF network element. or has another name. This is not limited in this application.
(9) The NEF network element is configured to securely open services, capabilities, and the like provided by the 3GPP network function to the outside. In the 5G communications system, the network exposure network element may be an NEF network element. In a future communications system such as a 6G communications system, the network exposure function network element may still be an NEF network element or have another name. This is not limited in this application. The Nnef is a service-based interface provided by the NEF. The NEF can communicate with other network functions by using the Nnef.
(10) The NRF network element is configured to: provide service registration, discovery, and authorization, maintain available network function (network function, NF) instance information, and can implement on-demand configuration of a network function and a service and interconnection between NFs. In the 5G communications system, the network storage network element may be an NRF network element. In a future communications system such as a 6G communications system, the network storage function network element may still be an NRF network element or have another name. This is not limited in this application. The Nnrf is a service-based interface provided by the NRF. The NRF can communicate with other network functions through the Nnrf.
(11) NSSAAF Network Element: Primarily responsible for the authentication and authorization of network slices. It can interact with the authentication, authorization, and accounting server (authentication, authorization, and accounting server, AAA-S) through the authentication, authorization, and accounting proxy (authentication, authorization, and accounting proxy, AAA-P).
(12) UDR Network Element: Used by the UDM network element to store subscription data or read subscription data, as well as by the PCF network element to store policy data or read policy data.

It can be understood that the foregoing network element or function may be a network element in a hardware device, or may be a software function running on dedicated hardware, or may be a virtualized function instantiated on a platform (for example, a cloud platform). Optionally, the foregoing network element or function may be implemented by one device, or may be jointly implemented by a plurality of devices, or may be a functional module within one device. This embodiment of this application does not impose a specific limitation thereto.

As shown in FIG. 1, the terminal device may access the 5G communications system by using an access network device such as an access network device (such as an (R)AN device), and the terminal device may communicate with the AMF network element by using a next generation network (next generation, NG) 1 interface (N1 for short). The access network device communicates with the AMF network element by using the N2 interface (N2 for short), the access network device communicates with the UPF network element by using the N3 interface (N3 for short), and the SMF network element communicates with the UPF network element by using the N4 interface (N4 for short). The UPF network element accesses the data network through the N6 interface (N6 for short).

Optionally, the communications system architecture shown in FIG. 1 further includes an OAM, an energy consumption network element, and a charging function (charging function, CHF) network element (or a charging enablement function (charging enablement function, CEF) network element). The energy consumption network element is configured to determine energy consumption information, and send the energy consumption information to another network element, for example, an AF network element. The energy consumption network element may be a newly introduced network element in the core network, or the energy consumption network element may be an original network element in the core network, and the original network element is used to implement a function of determining energy consumption information. For example, the energy consumption network element may be an NWDAF network element, a PCF network element, or the like. In this way, the core network may not include the energy consumption network element. The energy consumption network element may be separately disposed, or may be disposed together with another core network network element, for example, may be disposed together with the SMF network element. For example, the energy consumption information may include energy consumption used by the access network device to transmit data of the terminal device or energy efficiency (energy efficiency for short) used by the access network device to transmit data of the terminal device. The CHF network element is configured to support scenarios such as online charging, offline charging, and convergent charging, and functions as a charging gateway function (charging gateway function), completes CDR generation, combination, sorting, and formatting, and may further provide the SMF network element with a quota required for online charging.

It can be understood that the access network device, terminal device, network elements in the core network, OAM, etc., can be referred to as communication devices. For example, the access network device can be understood as a communication device with base station functions. The terminal device can be understood as a communication device with terminal functions. The network elements in the core network can be understood as devices with the functions of core network network elements. For example, the AMF can be understood as a communication device with AMF functions, and the OAM can be understood as a device with OAM functions.

It should be understood that the communication system architecture illustrated in FIG. 1 is intended to more clearly explain the technical solutions of the embodiments of this application. It does not constitute a limitation on the technical solutions provided in the embodiments of this application. A person of ordinary skill in the art may understand that, with the evolution of the communication system architecture and the emergence of new service scenarios, the technical solutions provided in the embodiments of this application are also applicable to similar technical problems.

Below, in combination with the accompanying drawings, a specific implementation of the communication method in the embodiments of this application is described in detail.

It should be understood that FIG. 2 to FIG. 8 below are a plurality of communication apparatuses (for example, a first network element, a second network element, a third network element, a fourth network element, a fifth network element, a network device, or a terminal device) An example in which an execution body of the interaction schematic diagram is used as an example in which the interaction schematic diagram is performed is shown. However, the execution body of the interaction schematic diagram is not limited in this application. For example, the first network element may be an SMF network element (or NWDAF network element), the second network element may be a PCF network element, the third network element may be a UDM network element (or UDR network element), and the fourth network element may be a CHF network element (or a CEF network element or another network element used to allocate an energy consumption quota of a session of a terminal device) The fifth network element may be an AF network element, the terminal device may be UE, and the network device may be a RAN device.

It should be understood that the method performed by the first network element in this application may alternatively be performed by a module (for example, a chip, a chip system, or a processor) applied to the first network element, or may alternatively be implemented by a logical node, a logical module, or software that can implement all or some functions of the first network element. A method performed by the second network element in this application may alternatively be performed by a module (for example, a chip, a chip system, or a processor) applied to the second network element, or may alternatively be implemented by a logical node, a logical module, or software that can implement all or some functions of the second network element. A method performed by the third network element in this application may alternatively be performed by a module (for example, a chip, a chip system, or a processor) applied to the third network element, or may alternatively be implemented by a logical node, a logical module, or software that can implement all or some functions of the third network element. A method performed by the fourth network element in this application may alternatively be performed by a module (for example, a chip, a chip system, or a processor) applied to the fourth network element, or may alternatively be implemented by a logical node, a logical module, or software that can implement all or some functions of the fourth network element. A method performed by the fifth network element in this application may alternatively be performed by a module (for example, a chip, a chip system, or a processor) applied to the fifth network element, or may alternatively be implemented by a logical node, a logical module, or software that can implement all or some functions of the fifth network element. A method performed by the network device in this application may alternatively be performed by a module (for example, a chip, a chip system, or a processor) applied to the network device, or may alternatively be implemented by a logical node, a logical module, or software that can implement all or some functions of the network device. A method performed by a terminal device in this application may alternatively be performed by a module (for example, a chip, a chip system, or a processor) applied to the terminal device, or may alternatively be implemented by a logical node, a logical module, or software that can implement all or some functions of the terminal device.

FIG. 2 is a schematic flowchart of a communication method according to an embodiment of this application. The method is applicable to the communications system architecture shown in FIG. 1. As shown in FIG. 2, the method includes the following steps.

Step 201: A second network element sends a control policy to a first network element. Correspondingly, the first network element receives the control policy from the second network element.

Optionally, in this embodiment of this application, if the first network element is replaced with a functional module such as a chip system, the functional module may not perceive a device from which the received information comes. If the second network element is replaced with a functional module such as a chip system, the functional module may not know which device the sent information is sent to.

For example, the control policy may be a policy control and charging (policy control and charging, PCC) rule. The control policy may be carried (or carried) in a message. The message may include (or carry) a reason for updating and sending the control policy, for example, an energy consumption cause indication, where the energy consumption cause indication is used to indicate that the control policy is updated due to an energy consumption reason (for example, a reason that the energy consumption quota is insufficient), or a name of the message may be updating the control policy due to an energy consumption reason.

Among them, the control policy can be used to control the network device in transmitting data of the terminal device. The control policy may be determined by the second network element based on the relationship between the energy consumption of the network device used to transmit data of the terminal device and the first energy consumption quota corresponding to the terminal device. The first energy consumption quota is used to indicate the maximum value of the energy consumption allowed for the network device to transmit data of the terminal device. For example, the data of the terminal device may refer to the user plane data of the terminal device.

For example, the control policy may include a strategy for reducing the energy consumption of the network device used to transmit data of the terminal device. For example, the strategy may include but is not limited to: reducing the transmission power of the network device used to transmit data of the terminal device, reducing the modulation complexity of the network device used to transmit data of the terminal device, reducing the number of retransmissions of the network device used to transmit data of the terminal device, reducing the transmission speed of the network device used to transmit data of the terminal device, updating the data radio bearer of the network device used to transmit data of the terminal device, combining/reducing the number of times the carrier is sent, or changing the time when the carrier is sent, etc.

It should be understood that, in what circumstances the second network element sends a control policy, is not limited in this embodiment of this application. For example, in an example, before the first network element receives the control policy from the second network element, the first network element may send a second message to the second network element based on a relationship between energy consumption of the network device for transmitting data of the terminal device and a first energy consumption quota corresponding to the terminal device. The second message is used to request the control policy. Optionally, the second message may include the relationship between the energy consumption of the data of the terminal device and the first energy consumption quota corresponding to the terminal device. In another example, before the first network element receives the control policy from the second network element, another one of the first network elements may send a message used to request the control policy to the second network element based on a relationship between energy consumption of the network device for transmitting other data of the terminal device and a third energy consumption quota corresponding to the terminal device (that is, a maximum value of energy consumption of the network device for transmitting other data of the terminal device)).

For example, before sending a control policy, the second network element may also determine, in combination with a local policy, whether it is necessary to perform policy control on the data transmission of the terminal device. When it is determined, in combination with the local policy, that it is necessary to perform policy control on the data transmission of the terminal device, the second network element may update (or modify) the existing control policy to obtain an updated control policy, and may send the updated control policy. For example, taking the control policy as a QoS policy as an example. When it is determined, in combination with the local policy, that it is necessary to perform policy control on the data transmission of the terminal device, the second network element may modify the existing QoS policy (that is, modify the QoS parameters) to obtain an updated QoS policy, and may send the updated QoS policy.

For example, the following describes, by using several possible examples, a relationship between energy consumption of a network device used to transmit data of a terminal device and a first energy consumption quota corresponding to the terminal device.

Example 1: The relationship between the energy consumption of the network device used to transmit the data of the terminal device and the first energy consumption quota corresponding to the terminal device includes that the difference between the first energy consumption quota and the energy consumption is less than or equal to a first threshold.

For example, the first energy consumption quota corresponding to the terminal device included in the subscription information may be an energy usage quota corresponding to the terminal device (an energy usage quota for daily use/monthly use/maximum use/idle time/busy time, etc., and the unit may be a joule (J))). The unit of the energy usage quota has the following characteristics:
(1) The unit may be a joule, a watt-hour (w ·h)), a kilowatt-hour (kw ·h)), or another energy consumption unit, etc. This embodiment of this application does not impose any limitation on this. It should be understood that the unit of the energy usage quota, the first energy consumption quota, the second energy consumption quota, the third energy consumption quota, the total energy consumption quota, or the remaining energy consumption quota may also use these units.
(2) The time period may be every minute, every hour, every day, every month, or every year, etc. This embodiment of this application does not impose any limitation on this. For example, if the energy usage quota is 10 kw·h per hour, the network device can transmit data to the terminal device at most for 10 kw·h of energy per hour. It should be understood that the unit of the energy usage quota, the first energy consumption quota, the second energy consumption quota, the third energy consumption quota, the total energy consumption quota, or the remaining energy consumption quota may also use these units.
(3) The energy usage quota can be divided into time periods, such as off-peak hours, peak hours, nighttime, daytime, peak power consumption periods, or off-peak power consumption periods, etc. For example, taking a peak power consumption period as an example, the energy consumption quota for the network device to transmit data to the terminal device during each month's peak power consumption period is 100 kW·h.

Optionally, the subscription information of the terminal device may further include at least one of the following: an energy consumption quota of a session associated with the terminal device, whether the terminal device supports policy control based on energy consumption, etc. For example, whether the terminal device supports policy control based on energy consumption may include: for a certain type of service, the network device is allowed to adjust the QoS policy at a specific time (for example, during a peak power consumption period, or during a busy power consumption period, or during an off-peak power consumption period, etc.), (for example, adjusting the packet loss rate or the maximum transmission rate of data transmission), or the network device is not allowed to adjust the QoS policy. For example, a certain type of service may be a guaranteed bit rate (guaranteed bit rate, GBR) service or a non-GBR service, etc.

For example, the energy consumption of the network device for transmitting data of the terminal device may include: the energy consumption of the network device for sending downlink data to the terminal device, the energy consumption of the network device for receiving uplink data from the terminal device, or the sum of the energy consumption of the network device for sending downlink data to the terminal device and the energy consumption of the network device for receiving uplink data from the terminal device. It should be understood that the energy consumption mentioned above does not refer to the energy consumption of the terminal device itself, but rather the energy consumption incurred by the network device in order to transmit data (for example, sending data and/or receiving data)) to the terminal device.

The energy consumption quota corresponding to the terminal device (for example, a first energy consumption quota, a second energy consumption quota, or a third energy consumption quota)) may include: the energy consumption quota of the network device for sending downlink data to the terminal device, the energy consumption quota of the network device for receiving uplink data from the terminal device, or the sum of the energy consumption quota of the network device for sending downlink data to the terminal device and the energy consumption quota of the network device for receiving uplink data from the terminal device. It should be understood that the energy consumption quota refers to the quota of energy consumption caused by the terminal device to the network device. For example, the maximum amount of energy (for example, electricity)) in watt-hours that the network device can consume in order to transmit data to the terminal device.

In a possible implementation, the first network element may first receive the subscription information of the terminal device from the third network element, and receive the sixth message from the network device (such as the RAN device or the AMF network element). The subscription information of the terminal device includes the first energy consumption quota, and the sixth message is used to determine energy consumption used by the network device to transmit data of the terminal device. For example, the sixth message may be a NAS message. Then, the first network element may determine a difference between the first energy consumption quota and the energy consumption, and compare the difference with the first threshold, to determine whether a control policy needs to be requested from the second network element.

For example, the first threshold may be 0, or the first threshold may be 20% of the first energy consumption quota. For example, if the first energy consumption quota is a, the first threshold is 0.2a. Optionally, the first energy consumption quota may be a maximum value of energy consumption used by the network device to transmit data of a session of the terminal device.

In an example, the first energy consumption quota is a, the network device uses energy consumption for transmitting data (for example, data of a PDU session) of the terminal device to b, and the first threshold is 0. The first network element may calculate a difference (a-b) between the first energy consumption quota a and the energy consumption b. If the difference (a-b) is less than or equal to 0 or the difference (a-b) is greater than 0, In this case, the first network element may send, to the second network element, a message used to request a control policy. Optionally, the message may include a difference between the first energy consumption quota and the energy consumption used by the network device to transmit the data of the terminal device that is used by the network device to transmit the data of the terminal device that is less than or equal to 0. Alternatively, the message may include a difference between the first energy consumption quota and the energy consumption used by the network device to transmit the data of the terminal device that is greater than 0.

In another example, in an example where the first energy consumption quota is a, the energy consumption used by the network device to transmit data of the terminal device is b, and the first threshold is 0.2a, the first network element may calculate a difference (a-b) between the first energy consumption quota a and the energy consumption b. If the difference (a-b) is less than or equal to 0.2a, the first network element may send, to the second network element, a message used to request a control policy. Optionally, the message may include a difference between the first energy consumption quota and energy consumption used by the network device to transmit data of the terminal device that is less than or equal to 20% of the first energy consumption quota.

The following describes an implementation process in which the first network element receives the subscription information of the terminal device from the third network element by using the following several possible cases.

Scenario 1: A session connection is established on a terminal device. (for example, a PDU session connection, for example, a PDU session modification procedure)), or in a process in which the terminal device establishes the session connection, the first network element may send the subscription information query request to the third network element. The subscription information query request is used to query subscription information (or may be referred to as subscription data) of the terminal device. For example, the subscription information query request may include an identifier (identification) (or an index or a name) of the terminal device, an identifier of a session (for example, an identifier of a PDU session), or the like. Then, the third network element may determine the subscription information of the terminal device based on the subscription information query request. Then, the third network element may send the subscription information of the terminal device to the first network element. It may be understood that the subscription information of the terminal device may be queried in a plurality of times. This is not limited in this embodiment of this application.

Case 2: The first network element may subscribe to the subscription information of the terminal device in advance. When the subscription information of the terminal device exists in the third network element, the third network element may send the subscription information of the terminal device to the first network element. Optionally, after determining that the subscription information of the terminal device exists locally, the third network element may actively push the subscription information of the terminal device to the first network element.

The following describes an implementation process in which the first network element receives the sixth message from the network device by using the following several possible cases.

Case 1: Reporting of the sixth message is triggered by the network device by default.

Case 2: The sixth message is sent by the network device according to the first network element and used to request the network device to periodically report energy consumption of the terminal device. (namely, energy consumption used by the network device to transmit data of the terminal device) The message is reported.

For example, the terminal device is UE, the network device is a RAN device, and the first network element is an SMF network element. In the mode in which reporting of the sixth message is triggered by default or in the mode in which the power consumption of the UE is periodically reported based on the request of the SMF network element, the RAN device may directly report the power consumption (for example, 6w/h per hour) of the UE to the SMF network element by using the N interface, or report the power consumption along with a user plane. Alternatively, the power consumption of the UE may be reported to the AMF network element by using the N2 interface, and the AMF network element reports the power consumption of the UE to the SMF network element.

It may be understood that the RAN device may report a specific numerical value of energy consumption to the SMF network element by using the N2 interface, or may report indication information (such as an index (index)) corresponding to energy consumption by using the N2 interface. For example, an example in which the RAN device reports, by using the N2 interface, indication information corresponding to energy consumption. The SMF network element may determine, based on the indication information corresponding to the energy consumption reported by the RAN device, the energy consumption used by the RAN device to transmit the data of the UE.

For example, the correspondence between the energy consumption value and the index may be established in advance, and certainly, the correspondence between the energy consumption value range and the index is not limited to: establishing the correspondence between the energy consumption value range and the index. The RAN device may determine, according to the determined numerical value of the energy consumption, the index corresponding to the energy consumption. Then, the RAN device may report the index corresponding to the energy consumption to the SMF network element. For example, the pre-established correspondence between the energy consumption value and the index may include: the energy consumption is 0 joules, corresponding to the index 1. The energy consumption is 10 joules, corresponding to index 2. Energy consumption: 20 joules, corresponding to index 3. Energy consumption is 30 joules, corresponding to index 4, ... Optionally, an index corresponding to energy consumption reported by the RAN device is used to indicate an energy consumption level. For example, three energy consumption levels, for example, high, medium, and low, are pre-divided. The RAN device determines an energy consumption level used by the RAN device to transmit data of the UE, and reports the energy consumption level to the SMF network element. The SMF network element may request, from the management network element (or the NWDAF network element, or the like), to obtain a mapping relationship (or may be referred to as a correspondence) between an energy consumption level and energy consumption that is reported by the RAN device. For example, the energy consumption level used by the RAN device to transmit the data of the UE is "low", and the SMF network element may determine, based on a mapping relationship between an energy consumption level and energy consumption, that the energy consumption corresponding to the "low" energy consumption level is 10 joules.

In another possible implementation, another first network element receives subscription information of a terminal device from a third network element, and receives an eleventh message from a network device. The subscription information of the terminal device includes a third energy consumption quota, and the eleventh message is used to determine the energy consumption of the network device for transmitting other data of the terminal device. For example, the eleventh message may be a NAS message. Afterwards, the first network element may determine a difference between the third energy consumption quota and the energy consumption, and compare the difference with a second threshold to determine whether it is necessary to request a control policy from the second network element. In this implementation, the second network element may separately send a control policy to multiple first network elements. In this way, the control policy may be universal. Therefore, the network device may use the control policy to perform corresponding energy consumption control on the data of the multiple sessions for transmitting the terminal device. The data of the multiple sessions is respectively managed by the multiple first network elements.

For example, the second threshold may be 0, or may be 20% of the third energy consumption quota. For example, if the third energy consumption quota is c, then the first threshold is 0.2c. Optionally, the third energy consumption quota may refer to a maximum value of energy consumption of the network device for transmitting data of another session of the terminal device.

In an example, the third energy consumption quota is c, energy consumption used by the network device to transmit other data (for example, data of another PDU session) of the terminal device is d, and the second threshold is 0. The first network element may calculate a difference (c-d) between the first energy consumption quota a and the energy consumption b. If the difference (c-d) is less than or equal to 0, the first network element may send, to the second network element, a message used to request a control policy. Optionally, the message may include that a difference between the third energy consumption quota and energy consumption used by the network device to transmit other data of the terminal device is less than or equal to 0.

In another example, for example, the third energy consumption quota is c, the energy consumption used by the network device to transmit the other data of the terminal device is d, and the second threshold is 0.2c. The first network element may calculate a difference (c-d) between the first energy consumption quota c and the energy consumption d. If the difference (c-d) is less than or equal to 0.2c, the first network element may send, to the second network element, a message used to request a control policy. Optionally, the message may include a difference between the third energy consumption quota and energy consumption used by the network device to transmit other data of the terminal device that is less than or equal to 20% of the third energy consumption quota.

It should be understood that, for another first network element receiving subscription information of a terminal device from a third network element, an implementation process may refer to the implementation process in which the first network element receives subscription information of the terminal device from the third network element. For another first network element receiving an eleventh message from a network device, an implementation process may refer to the implementation process in which the first network element receives a sixth message from the network device. Details are not described herein again.

Example 2: In a case where the data of the terminal device is the data of the first session of the terminal device, a relationship between the energy consumption of the network device used to transmit the data of the terminal device and the first energy consumption quota corresponding to the terminal device includes that the first energy consumption quota is greater than the energy consumption balance quota corresponding to the terminal device.

Among them, the energy consumption balance quota is the total energy consumption quota corresponding to the terminal device minus the second energy consumption quota used by the network device to transmit data of another session of the terminal device.

In the embodiments of this application, the first network element may first send a seventh message to the fourth network element. The seventh message may be used to request the first energy consumption quota. For example, the seventh message may include an identifier (or an index or a name) of the first session. Then, the fourth network element may send an eighth message to the first network element. The eighth message may be used to indicate that the first energy consumption quota is greater than the energy consumption balance quota corresponding to the terminal device. It should be understood that, before the first network element sends the seventh message to the fourth network element, the terminal device has established a session connection (for example, a PDU session connection).

It can be understood that, before the fourth network element sends the eighth message to the first network element, the fourth network element may send a tenth message (for example, a subscription information query request) to the third network element. The tenth message is used to query subscription information of the terminal device. For example, the tenth message may include an identifier of the terminal device. Then, the third network element may determine the subscription information of the terminal device based on the tenth message, and may send the subscription information of the terminal device to the fourth network element. The subscription information of the terminal device may include a total energy consumption quota corresponding to the terminal device. Optionally, the subscription information of the terminal device may further include whether the terminal device supports policy control based on energy consumption. Then, after receiving the seventh message from the first network element, the fourth network element may calculate (or collect statistics on) a second energy consumption quota used by the network device to transmit data of another session of the terminal device, and may determine, based on the total energy consumption quota included in the subscription information of the terminal device and the second energy consumption quota used by the network device to transmit data of another session of the terminal device, the energy consumption balance quota corresponding to the terminal device. When the first energy consumption quota requested by the first network element is greater than the energy consumption balance quota corresponding to the terminal device, the fourth network element sends the eighth message to the first network element.

For example, the first session is a PDU session, the identifier of the PDU session is 1, the first network element is an SMF network element, the fourth network element is a CHF network element, the seventh message is a limit application request, and the eighth message is a limit indication. The SMF network element may send a limit application request to the CHF network element. The quota application request is used to request to allocate an energy consumption quota to the PDU session of the terminal device. The quota application request may include the identifier 1 of the PDU session. Optionally, the limit application request may further include a specific value of the energy consumption limit applied for by the SMF network element.

In an example, when the quota application request includes a specific value of the energy consumption quota applied for by the SMF network element, the CHF network element may calculate the energy consumption quota used by the network device to transmit data of another PDU session of the terminal device. In addition, the current remaining energy consumption quota corresponding to the terminal device may be determined based on the total energy consumption quota corresponding to the terminal device and the energy consumption quota used by the network device to transmit data of another PDU session of the terminal device. Then, the CHF network element may determine whether the current energy consumption remaining quota is greater than a specific value of the energy consumption quota applied for by the SMF network element. When the specific value of the energy consumption quota applied for by the SMF network element is less than or equal to the current energy consumption remaining quota, the CHF network element may send the energy consumption quota applied for by the SMF network element to the SMF network element. When the specific value of the energy consumption quota applied for by the SMF network element is greater than the current energy consumption remaining quota, the CHF network element may send the quota indication to the SMF. The limit indication may be used to indicate that the current remaining energy consumption limit is less than the energy consumption limit applied for by the SMF network element. For example, the quota indication may indicate a value of energy consumption. For example, the energy consumption value is a current energy consumption remaining quota (for example, 100 joules), and the SMF network element may learn, by using the current energy consumption remaining quota, that the current energy consumption remaining quota is insufficient (that is, the current remaining energy consumption quota is less than the energy consumption quota applied for by the SMF network element.) Optionally, the quota indication may also be directly used to indicate that the current remaining energy consumption quota is insufficient, or a name of the quota indication is that the current remaining energy consumption quota is insufficient.

In another example, when the quota application request does not include the specific value of the energy consumption quota applied for by the SMF network element, the CHF network element may determine, based on the preset quota configuration information, the specific value of the energy consumption quota that each SMF network element needs to apply for each time. Then, the CHF network element may calculate the energy consumption quota used by the network device to transmit data of other PDU sessions of the terminal device, and may determine, based on the total energy consumption quota corresponding to the terminal device and the energy consumption quota used by the network device to transmit data of other PDU sessions of the terminal device, the current remaining energy consumption quota corresponding to the terminal device. Then, the CHF network element may determine whether the current remaining energy consumption quota is greater than the specific value of the energy consumption quota applied for by the SMF network element. When the specific value of the energy consumption quota applied for by the SMF network element is less than or equal to the current remaining energy consumption quota, the CHF network element may send the energy consumption quota applied for by the SMF network element to the SMF network element. When the specific value of the energy consumption quota applied for by the SMF network element is greater than the current remaining energy consumption quota, the CHF network element may send a quota indication to the SMF. For example, the preset quota configuration information may include a specific value of the energy consumption quota that each SMF network element needs to apply for each time, which is preconfigured. Alternatively, the preset quota configuration information may also include a specific value of the energy consumption quota that each SMF network element needs to apply for each time, which is preconfigured, and the proportion of the total energy consumption quota occupied by the energy consumption quota.

The following describes an implementation process in which the first network element sends the second message to the second network element by using the following several possible implementations.

Manner 1: The first network element may determine a relationship between the energy consumption used by the network device to transmit data of the terminal device and the first energy consumption quota corresponding to the terminal device. Then, when the subscription information of the terminal device that is requested by the first network element to query includes that the terminal device supports policy control based on energy consumption, the first network element sends the second message to the second network element based on a relationship between energy consumption used by the network device to transmit data of the terminal device and the first energy consumption quota corresponding to the terminal device.

Manner 2: The first network element may determine a relationship between the energy consumption used by the network device to transmit data of the terminal device and the first energy consumption quota corresponding to the terminal device. In addition, the first network element may receive the third message from the terminal device. The third message is used to instruct to update the control policy. For example, the third message may include indication information, and the indication information is used to instruct to update the control policy (or may be understood as used by the network side to determine the energy consumption control logic for the terminal device). Then, when the subscription information of the terminal device that is requested by the first network element to query includes that the terminal device supports policy control based on energy consumption, the first network element may perform policy control based on the third message and a relationship between the energy consumption that is used by the network device to transmit data of the terminal device and the first energy consumption quota corresponding to the terminal device. sending the second message to the second network element. Optionally, the third message may include a relationship between the first energy consumption quota corresponding to the terminal device and the energy consumption amount used by the network device to transmit data of the terminal device.

Method 3: The first network element may determine the relationship between the energy consumption of the network device used to transmit data of the terminal device and the first energy consumption quota corresponding to the terminal device. Afterwards, the first network element may directly send a second message to the second network element based on the relationship between the energy consumption of the network device used to transmit data of the terminal device and the first energy consumption quota corresponding to the terminal device.

Method 4: The first network element may determine the relationship between the energy consumption of the network device used to transmit data of the terminal device and the first energy consumption quota corresponding to the terminal device. Moreover, the first network element may receive a third message from the terminal device. The third message is used to indicate an update of a control policy. For example, the third message may include indication information, where the indication information is used to indicate an update of a control policy (or may be understood as being used to let the network side determine the energy consumption control logic for the terminal device). Afterwards, the first network element may directly send a second message to the second network element based on the third message and the relationship between the energy consumption of the network device used to transmit data of the terminal device and the first energy consumption quota corresponding to the terminal device. Optionally, the third message may include the relationship between the energy consumption of the network device used to transmit data of the terminal device and the first energy consumption quota corresponding to the terminal device.

Optionally, before the first network element receives the third message from the terminal device, the first network element may also receive the fourth message from the network device. The fourth message is used to determine the energy consumption of the network device for transmitting data of the terminal device. Subsequently, the first network element may determine, based on the fourth message, the energy consumption of the network device for transmitting data of the terminal device, and may determine, based on the first energy consumption quota corresponding to the terminal device and the energy consumption of the network device for transmitting data of the terminal device, the relationship between the energy consumption of the network device for transmitting data of the terminal device and the first energy consumption quota corresponding to the terminal device. Then, the first network element may send the fifth message to the terminal device. For example, the fifth message may include the energy consumption quota usage (which may be understood as the relationship between the energy consumption of the network device for transmitting data of the terminal device and the first energy consumption quota corresponding to the terminal device, for example, the first energy consumption quota has been used up or is about to be used up), or the fifth message may include indication information, where the indication information is used to indicate the relationship between the energy consumption of the network device for transmitting data of the terminal device and the first energy consumption quota corresponding to the terminal device. Optionally, the fifth message may further include a busy time/idle time calendar. For example, the fifth message may be an N1 message, for example, a NAS message. It should be noted that, for an implementation process in which the first network element receives the fourth message from the network device, refer to the following implementation process in which the first network element receives the sixth message from the network device. Details are not described herein again.

The following describes, through several possible implementations, the corresponding operations performed by the terminal device after receiving the fifth message.

Implementation 1: The terminal device updates the data transmission policy of the application program of the terminal device based on the relationship between the energy consumption of the network device used by the terminal device to transmit data of the terminal device and the first energy consumption quota corresponding to the terminal device.

For example, after learning the relationship between the energy consumption of the network device used by the terminal device to transmit data of the terminal device and the first energy consumption quota corresponding to the terminal device, the terminal device may also update the data transmission policy of the application program of the terminal device in combination with a locally preconfigured policy.

For example, the application program of the terminal device may include an operating system (Operating System, OS), a system interface (for example, an OS interface), or a third-party application program, etc. For example, the data transmission policy may include at least one of the following: postponing an automatic update time of an application program, or postponing a data synchronization time between an application program and a cloud.

In an example, when the fifth message includes a busy/idle time calendar, the terminal device may determine, based on the relationship between the busy/idle time calendar, the energy consumption of the network device used to transmit the data of the terminal device, and the first energy consumption quota corresponding to the terminal device, the specific time when the automatic update time of the application program or the data synchronization time between the application program and the cloud is delayed and executed. In another example, when the fifth message does not include a busy/idle time calendar, the terminal device may also determine the busy/idle time based on the pre-configuration manner of the terminal device. Thereafter, the terminal device may determine, based on the relationship between the busy/idle time calendar, the energy consumption of the network device used to transmit the data of the terminal device, and the first energy consumption quota corresponding to the terminal device, the specific time when the automatic update time of the application program or the data synchronization time between the application program and the cloud is delayed and executed. For example, the automatic update time of the application program is delayed and executed at night, or the data synchronization time between the application program and the cloud is delayed and executed during idle times.

Implementation Method 2: The terminal device sends a third message to the first network element based on the relationship between the energy consumption of the network device included in the fifth message and used to transmit the data of the terminal device, and the first energy consumption quota corresponding to the terminal device.

For example, the terminal device may send a notification message to an application (for example, an application interface) based on the relationship between the energy consumption of the network device included in the fifth message and used to transmit the data of the terminal device, and the first energy consumption quota corresponding to the terminal device. The notification message may be used to prompt (or remind) the user that "the current energy consumption increases, and network charging may increase." Afterwards, the terminal device may also send an indication of a user adjusting a control policy to the application. The indication of the user adjusting the control policy may be an indication for waiting for the user to confirm whether to adjust the control policy. In response to a first operation (for example, a click confirmation operation) triggered by the user, the application may send a message indicating that the user confirms adjusting the control policy to the terminal device. After receiving the message indicating that the user confirms adjusting the control policy, the terminal device may send a third message to the first network element. For example, the third message may be a non-access stratum (non-access stratum, NAS) message. For example, the NAS message may include an indication information (for example, a user energy consumption feedback indication), where the user energy consumption feedback indication is used to instruct the network side to determine the energy consumption control logic for the terminal device (or may be understood as being used to instruct the network side to update the control policy)). The first network element may enable energy consumption control on the terminal device based on the user energy consumption feedback indication. In this way, the method can enable a user to instruct the network side to perform precise policy control according to the user's own will, so that the policy control can be more personalized.

Optionally, in the case where the network status changes (for example, the first energy consumption quota corresponding to the terminal device changes, or the total energy consumption quota corresponding to the terminal device changes)), the network side may update (or adjust) the control policy corresponding to the terminal device. The following describes the update process of the control policy by using several possible implementations.

Method 1: When the first energy consumption quota corresponding to the terminal device is updated, the third network element may determine, based on a preconfigured policy, a corresponding first network element, and may send a first update message to the first network element. The first update message may be used to indicate that the first energy consumption quota corresponding to the terminal device has been updated. The first update message may include the updated first energy consumption quota. Then, the first network element may send a ninth message to the second network element based on the first update message. The ninth message is used to request an update of the control policy. Optionally, the ninth message may include that the difference between the updated first energy consumption quota and the energy consumption used by the network device to transmit the data of the terminal device is greater than a first threshold. After receiving the ninth message, the second network element may send an updated control policy to the first network element. It should be understood that the updated control policy corresponds to the updated first energy consumption quota.

For example, a preconfigured policy may be as follows: The first network element subscribes to subscription information of the terminal device. When the subscription information of the terminal device is updated, the third network element sends the updated subscription information to the first network element. The updated subscription information may include an updated first energy consumption quota.

Method 2: When the total energy consumption quota corresponding to the terminal device is updated, the third network element may determine a corresponding fourth network element based on a preconfigured policy, and may send a second update message to the fourth network element. The second update message may be used to indicate that the total energy consumption quota corresponding to the terminal device has been updated. The second update message may include the updated total energy consumption quota. Then, the fourth network element may update the first energy consumption quota based on the updated total energy consumption quota, and may send a third update message to the first network element. The third update message may be used to indicate that the first energy consumption quota corresponding to the terminal device has been updated. The third update message may include the updated first energy consumption quota. Then, the first network element may send a ninth message to the second network element based on the third update message. The ninth message is used to request an update of a control policy. After receiving the ninth message, the second network element may send an updated control policy to the first network element. In this way, when the control policy of the terminal device is associated with the charging procedure, the first network element may dynamically request a control policy based on an indication of the fourth network element.

For example, a preconfigured policy may be as follows: The fourth network element subscribes to subscription information of the terminal device. When the subscription information of the terminal device is updated, the third network element sends the updated subscription information to the fourth network element. The updated subscription information may include an updated total energy consumption quota.

Optionally, the fourth network element may determine the updated first energy consumption quota based on the updated total energy consumption quota and in combination with the energy consumption quota configuration information used by the network device to transmit data of the first session. The updated subscription information may include an updated total energy consumption quota.

For example, in the foregoing manner 1, the first energy consumption quota corresponding to the terminal device is updated, or in the foregoing manner 2, the total energy consumption quota corresponding to the terminal device is updated, and this may be learned through indication information from the AF network element. The indication information may indicate that a new energy consumption quota is added. For example, when the energy consumption quota is used up, the terminal device performs a recharge operation, and the AF network element may send indication information to the third network element.

It can be understood that the execution of the foregoing method 1 or the foregoing method 2 can enable the network side to perform more refined policy control on the data transmission of the terminal device. This ensures that when the network status changes, the network side can promptly and effectively adjust the control policy for the terminal device.

Step 202: The first network element sends a first message to the network device according to the control policy. Correspondingly, the network device receives the first message.

Among them, the first message may be used to request a reduction in the energy consumption of the network device used to transmit data of the terminal device. Alternatively, the first message may be used to improve the energy efficiency of the network device used to transmit data of the terminal device. For example, the first message may include an energy consumption reason indicator and/or a control policy. Optionally, the first message may further include an identifier of a PDU session and/or an identifier of the terminal device. For example, the first message may be a PDU session modification request.

For example, the energy efficiency of the network device used to transmit data of the terminal device may include: the energy efficiency of the network device in sending downlink data, the energy efficiency of the network device in receiving uplink data, or other energy efficiencies determined based on the energy efficiency of the downlink data and the energy efficiency of the uplink data.

It should be understood that improving the energy efficiency of a network device for transmitting data of a terminal device can be understood as reducing the energy consumption per unit of data transmitted by the network device for the terminal device. "Per unit of data" may refer to per bit of data. For example, reducing the energy consumption per unit of data transmitted by the network device for the terminal device can be understood as reducing the energy consumption per bit of data transmitted by the network device. For example, reducing the energy consumption of the network device for transmitting each unit of data of the terminal device is reducing energy consumption of the network device for transmitting each 1-bit data. For example, a unit of energy efficiency may be joules per bit (Joule/bit), or watts per hour per bit (W/h/bit), or the like.

In the embodiments of this application, after receiving a control policy (for example, an updated control policy) from a second network element, the first network element may send a first message to the network device. For example, when the message carrying the control policy further includes an energy consumption reason indication, the first network element may also determine, based on the energy consumption reason indication and in combination with a local policy, whether to perform the control policy adjustment of the terminal device. When the first network element needs to perform the control policy adjustment of the terminal device, the first network element may send the first message to the network device.

After receiving the first message, the network device may transmit (for example, receive or send) data of the terminal device based on a policy used to reduce energy consumption of the network device for transmitting data of the terminal device. For example, when the first message includes an energy consumption reason indicator, the network device may also determine, based on the energy consumption reason indicator and in combination with a local policy, whether to execute the energy saving policy (which may be understood as a policy used to reduce energy consumption of the network device for transmitting data of the terminal device)). When the network device needs to execute the energy saving policy, the network device may transmit data of the terminal device based on the energy saving policy, so as to directly reduce energy consumption of the network device for transmitting data of the terminal device. In this way, after receiving the first message, the network device may determine, based on actual conditions of the network device, whether to execute the energy saving policy to provide a service for the terminal device. It should be understood that, when the network device executes the energy saving policy for the terminal device, it is not that the network device itself saves energy, but that the network device transmits data of one or more terminal devices in an energy saving manner, and does not change the transmission manner of other terminal devices except the one or more terminal devices. <t1>

From the above steps 201 to 202, it can be seen that the network side determines (or updates or adjusts) the control policy based on the relationship between the energy consumption of the network device used to transmit data of the terminal device and the first energy consumption quota corresponding to the terminal device. Then, the network device is requested to reduce the energy consumption for transmitting data of the terminal device based on the control policy. In this way, the network side can perform policy control on data transmission of the terminal device based on energy consumption, which helps to reduce the energy consumption caused by the terminal device to the network side to a certain extent.

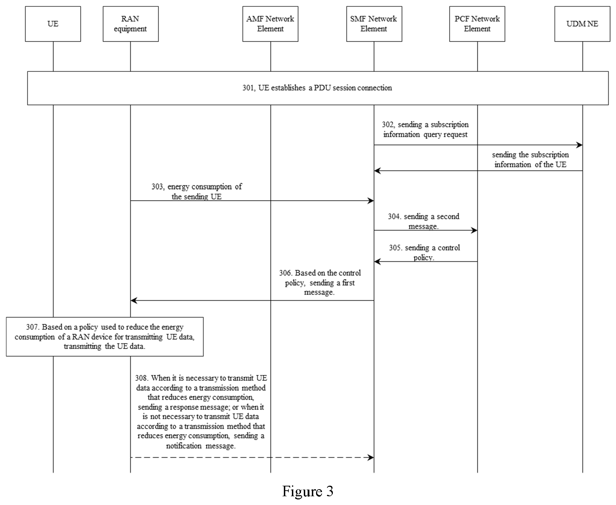

Based on the technical solution of the communication method illustrated in FIG. 2 above, the following provides a detailed description of the communication method illustrated in FIG. 2 above through specific examples shown in FIG. 3 to FIG. 5. In the specific examples shown in FIG. 3 to FIG. 5, the terminal device is UE, the network device is a RAN device, the first network element is an SMF network element, the second network element is a PCF network element, the third network element is a UDM network element, the fourth network element is a CHF network element, and the first session is a PDU session.

Figure 3 is a schematic flowchart illustrating another communication method according to an embodiment of this application. As shown in Figure 3, the specific process of this method may include:
Step 301: The UE establishes a PDU session connection.

Optionally, the process of establishing a PDU session connection by the UE in step 301 may refer to the existing process of establishing a PDU session connection. This will not be further elaborated here.

Step 302: The SMF network element sends a subscription information query request to the UDM network element. Correspondingly, the UDM network element receives the subscription information query request from the SMF network element.

Among them, the subscription information query request can be used to query the subscription information of the UE. For example, the subscription information query request may include the identifier of the UE.

It can be understood that the UDM network element may send the subscription information of the UE that is obtained through query to the SMF network element. Correspondingly, the SMF network element receives the subscription information of the UE from the UDM network element.

Among them, the subscription information of the UE may include the first energy consumption quota corresponding to the UE. Optionally, the subscription information of the UE may further include at least one of the following: an energy consumption quota of a session associated with the UE, or whether the UE supports policy control based on energy consumption, etc.

Step 303: The RAN device sends the energy consumption of the UE to the SMF network element. Correspondingly, the SMF network element receives the energy consumption of the UE from the RAN device.

It should be understood that there is no sequence relationship in the execution of step 302 and step 303 above. For example, step 302 may be executed before step 303, or may be executed after step 303, or may be executed in parallel with step 303.

For example, the RAN device may directly send the energy consumption of the UE to the SMF network element, or may directly periodically send the energy consumption of the UE to the SMF network element, or may send the energy consumption of the UE to the SMF network element through the AMF network element, or may periodically send the energy consumption of the UE to the SMF network element through the AMF network element.

It may be understood that the RAN device in step 303 may be replaced with a UPF network element, an NWDAF network element, an OAM network element, a power consumption network element, or the like, which mainly depends on who the SMF network element subscribes to the energy consumption of the UE from.

Optionally, for an implementation manner of step 303, refer to the related description about the sixth message in step 201. Details are not described herein again.

Step 304: The SMF network element sends a second message to the PCF network element. Correspondingly, the PCF network element receives the second message from the SMF network element.

The second message is used to request a control policy. Optionally, the second message may include that a difference between the first energy consumption quota and energy consumption that is of the UE and that is reported by the RAN device at a time is less than or equal to the first threshold.

For example, for the energy consumption of the UE that is reported by the RAN device each time, when the subscription information of the UE includes that the UE supports policy control based on energy consumption, When the difference between the first energy consumption quota included in the subscription information and the reported energy consumption of the UE is less than or equal to the first threshold, the SMF network element may send the second message to the PCF network element.

Step 305: The PCF network element sends a control policy to the SMF network element. Correspondingly, the SMF network element receives the control policy from the PCF network element.

Optionally, the PCF network element may further send an energy consumption reason indicator to the SMF network element. The energy consumption reason indicator may be used to indicate that the control policy is updated due to insufficient energy consumption quota.

Optionally, the descriptions related to the control policy in step 305 may refer to the descriptions related to the control policy in step 201 above. These descriptions will not be repeated here.

Step 306: The SMF network element sends a first message to the RAN device according to the control policy. Correspondingly, the RAN device receives the first message from the SMF network element.

Among them, the first message may be used to request to reduce the energy consumption of the RAN device used to transmit data of the UE, or the first message may be used to improve the energy efficiency of the RAN device used to transmit data of the UE. The first message may include an energy consumption reason indicator and/or a control policy. Optionally, the first message may further include an identifier of a PDU session and/or an identifier of the UE.

In an example, after receiving an energy consumption reason indication, the SMF network element may determine, based on the energy consumption reason indication and in combination with local policies, whether it is necessary to perform a control policy adjustment for the UE. When it is necessary to perform a control policy adjustment for the UE, the SMF network element may send a first message to the RAN device.

In another example, after receiving an energy consumption reason indication, the SMF network element may determine, based on the energy consumption reason indication and the subscription information, that the terminal device supported by the subscription information supports policy control based on energy consumption. The SMF network element may further determine, in combination with local policies, whether it is necessary to perform a control policy adjustment for the UE. When it is necessary to perform a control policy adjustment for the UE, the SMF network element may send a first message to the RAN device. It should be understood that the terminal device supported by the subscription information and that supports policy control based on energy consumption may be obtained through query in the foregoing step 302, or may be obtained through query in another subscription information query request sent by the SMF network element to the UDM network element at another time. This is not limited in the embodiments of this application.

Step 307: The RAN device transmits the data of the UE according to a policy used to reduce energy consumption used by the RAN device to transmit the data of the UE.

For example, when the first message includes the energy consumption cause indication, the RAN device may determine, according to the energy consumption cause indication and with reference to a local policy, whether an energy saving policy needs to be executed (which may be understood as a policy used to reduce energy consumption used by the RAN device to transmit data of the UE). When the RAN device needs to execute the energy saving policy, the RAN device may transmit the data of the UE based on the energy saving policy, so as to directly reduce energy consumption for transmitting the data of the UE by the RAN device.

Step 308: When the RAN device needs to transmit the data of the UE in the transmission manner that reduces energy consumption, the RAN device sends a response message to the SMF network element; or when the RAN device does not need to transmit the data of the UE in the transmission manner that reduces energy consumption, the RAN device sends a notification message to the SMF network element. Correspondingly, the SMF network element receives the response message or the notification message from the RAN device.

The above step 308 is an optional step.

For example, among them, the response message is used to indicate that the RAN device transmits UE data according to a transmission manner (or may be referred to as a transmission mode) that reduces energy consumption (i.e., reduces the energy consumption of transmitting UE data). In other words, the RAN device executes a policy (which may be understood as an energy-saving policy) for reducing the energy consumption of the RAN device for transmitting UE data. The notification message is used to indicate that the transmission manner used for transmitting UE data has not been adjusted. Optionally, the notification message may include a cause value, and the cause value is used to indicate a reason why the transmission manner used for transmitting UE data has not been adjusted.

For example, when the RAN device determines that it needs to execute an energy-saving policy, it may send the response message described above to the SMF network element. When the RAN device determines that it does not need to execute an energy-saving policy, it may send the notification message described above to the SMF network element.

From the above steps 301 to 308, it can be seen that by allowing the network side to adjust the policy used by the RAN device to transmit UE data according to the energy consumption usage of the RAN device for transmitting UE data, this can be achieved. The network side can perform policy control on the data transmission of the UE based on the energy consumption, and can reduce the energy consumption of the RAN device for transmitting UE data to a certain extent.

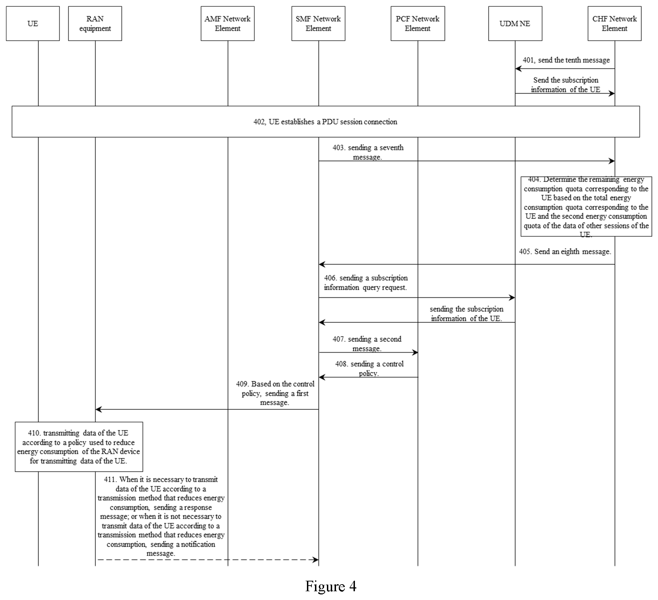

Figure 4 is a schematic flowchart illustrating another communication method according to an embodiment of this application. As shown in Figure 4, the specific process of this method may include:

Step 401: The CHF network element sends a tenth message to the UDM network element. Correspondingly, the UDM network element receives the tenth message from the CHF network element.

Among them, the tenth message is used to query the subscription information of the UE. For example, the tenth message may include the identifier of the UE.

It can be understood that the UDM network element may send the subscription information of the UE that is obtained through query to the CHF network element. Correspondingly, the CHF network element receives the subscription information of the UE from the UDM network element.

Among them, the subscription information of the UE may include the total energy consumption quota corresponding to the UE. Optionally, the subscription information of the UE may further include whether the UE supports policy control based on energy consumption.

Step 402: The UE establishes a PDU session connection.

Optionally, in step 402, the process by which the UE establishes a PDU session connection can refer to the existing process for establishing a PDU session connection. This will not be further elaborated here.

Step 403: The SMF network element sends a seventh message to the CHF network element. Correspondingly, the CHF network element receives the seventh message from the SMF network element.

Among them, optionally, in step 402, the process by which the UE establishes a PDU session connection can refer to the existing process for establishing a PDU session connection. This will not be further elaborated here.

Step 404: The CHF network element determines, based on the total energy consumption quota corresponding to the UE and the second energy consumption quota of the data of the other session of the UE, the remaining energy consumption quota corresponding to the UE.

In this embodiment of this application, the CHF network element calculates the difference between the total energy consumption quota and the second energy consumption quota of the data of another session of the UE, and determines the difference as the remaining energy consumption quota.

Step 405: The CHF network element sends an eighth message to the SMF network element. Correspondingly, the SMF network element receives the eighth message from the CHF network element.

Among them, the eighth message may be used to indicate that the first energy consumption quota is greater than the remaining energy consumption quota corresponding to the UE.

Optionally, when the first energy consumption quota is less than or equal to the remaining energy consumption quota corresponding to the UE, the CHF network element may send the first energy consumption quota to the SMF network element.

Step 406: The SMF network element sends a subscription information query request to the UDM network element. Correspondingly, the UDM network element receives the subscription information query request from the SMF network element.

The above step 406 is an optional step.

Among them, the subscription information query request can be used to query the subscription information of the UE. For example, the subscription information query request may include the identifier of the UE.

It can be understood that the UDM network element may send the subscription information of the UE that is obtained through query to the SMF network element. Correspondingly, the SMF network element receives the subscription information of the UE from the UDM network element.

It can be understood that the subscription information of the UE may include whether the UE supports policy control based on energy consumption. Optionally, the subscription information of the UE may further include a total energy consumption quota corresponding to the UE.

It should be understood that performing the above step 406 is to determine whether the UE supports policy control based on energy consumption.

Step 407: The SMF network element sends a second message to the PCF network element. Correspondingly, the PCF network element receives the second message from the SMF network element.

The second message is used to request a control policy. Optionally, the second message may include that the first energy consumption quota is greater than the energy consumption remaining quota corresponding to the UE.

Optionally, if step 406 is performed, the SMF network element may determine, based on whether the UE supports policy control based on energy consumption and a local policy, whether to send the second message to the PCF network element. For example, when the first energy consumption quota is greater than the energy consumption remaining quota corresponding to the UE, if the subscription information of the UE includes that the UE supports policy control based on energy consumption, the SMF network element may send the second message to the PCF network element with reference to the local policy. If step 406 is not performed, the SMF network element may trigger sending of the second message based on the preconfiguration of the SMF network element.

Step 408: The PCF network element sends the control policy to the SMF network element. Correspondingly, the SMF network element receives the control policy from the PCF network element.

Optionally, in this embodiment of this application, the PCF network element may further send an energy consumption reason indication to the SMF network element. The energy consumption reason indication may be used to indicate that the control policy is updated due to an insufficient energy consumption quota.

Optionally, in step 408, for a related description of the control policy, refer to the related description of the control policy in step 201 above. Details are not described herein again.

Optionally, for the related description of the control policy in step 408, refer to the related description of the control policy in step 201 above. Details are not described herein again.

Step 409: The SMF network element sends a first message to the RAN device according to the control policy. Correspondingly, the RAN device receives the first message from the SMF network element.

Optionally, for an implementation of step 409, reference may be made to the related implementation of step 306 above. This will not be further elaborated here.

Step 410: The RAN device transmits data of the UE according to a policy used to reduce energy consumption of the RAN device for transmitting the UE's data.

Optionally, for an implementation of step 410, reference may be made to the related implementation of step 307 above. This will not be further elaborated here.

Step 411: When the RAN device needs to transmit data of the UE in a transmission manner that reduces energy consumption, the RAN device sends a response message to the SMF network element. Alternatively, when the RAN device does not need to transmit data of the UE in a transmission manner that reduces energy consumption, the RAN device sends a notification message to the SMF network element. Accordingly, the SMF network element receives the response message or the notification message from the RAN device.

Step 411 is an optional step.

Optionally, for the implementation of step 411, refer to the related implementation of step 308 above. Details are not described herein again.

From the above steps 401 to 411, it can be seen that by enabling the network side to adjust, when the remaining energy level corresponding to the UE is less than the first energy level, a policy used by the RAN device to transmit UE data, this can implement policy control, by the network side, on data transmission of the UE based on energy consumption, and can implement, to some extent, a reduction in energy consumption of the RAN device for transmitting UE data.

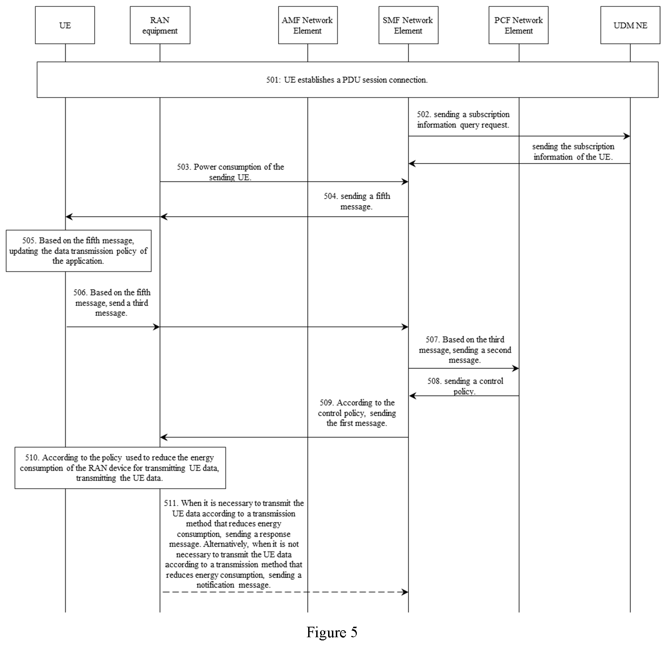

FIG. 5 is a schematic flowchart of still another communication method according to an embodiment of this application. As shown in FIG. 5, the specific procedure of the method may include the following steps:

Step 501: The UE establishes a PDU session connection.

Optionally, for the procedure of establishing the PDU session connection by the UE in step 501, refer to an existing procedure of establishing a PDU session connection. Details are not described herein again.

Step 502: The SMF network element sends a subscription information query request to the UDM network element. Correspondingly, the UDM network element receives the subscription information query request for the UE from the SMF network element.

Among them, the subscription information query request for the UE can be used to query the subscription information of the UE. For example, the subscription information query request can include the identifier of the UE.

It can be understood that the UDM network element may send the subscription information of the UE that is obtained through query to the SMF network element. Correspondingly, the SMF network element receives the subscription information of the UE from the UDM network element.

Among them, the subscription information of the UE may include the first energy consumption quota corresponding to the UE. Optionally, the subscription information of the terminal device may further include at least one of the following: an energy consumption quota of a session associated with the UE, or whether the UE supports policy control based on energy consumption, etc.

Among them, the subscription information of the UE may include the first energy consumption quota corresponding to the UE. Optionally, the subscription information of the terminal device may further include at least one of the following: an energy consumption quota of a session associated with the UE, or whether the UE supports policy control based on energy consumption, etc.

It should be understood that there is no specific order in which steps 502 and 503 are executed. For example, step 502 may be executed before step 503, or may be executed after step 503, or may be executed concurrently with step 503.

Optionally, for the implementation of the fifth message in step 503, reference may be made to the implementation of the fifth message in step 303. Details are not described herein again.

Step 504: The SMF network element sends a fifth message to the UE. Correspondingly, the UE receives the fifth message from the SMF network element.

Optionally, in step 504, the related description of the fifth message may refer to the related description of the fifth message in step 201. Details are not described herein again.

In this embodiment of this application, for the energy consumption of the UE reported by the RAN device each time, the SMF network element may calculate a difference between the first energy consumption quota and the energy consumption of the UE reported in this time. When the difference is less than or equal to a first threshold, the SMF network element may send a fifth message to the UE.

Optionally, before the SMF network element sends the fifth message to the UE, the SMF network element may send, to the PCF network element when the difference is less than or equal to the first threshold, a message used to request the control policy. For example, the message may include that a difference between the first energy consumption quota and the energy consumption that is of the UE and that is reported by the RAN device at a time is less than or equal to the first threshold. Then, the PCF network element may determine, with reference to the local policy, whether policy control needs to be performed on data transmission of the UE. When determining, with reference to the local policy, that policy control needs to be performed on data transmission of the UE, the PCF network element may update an existing control policy to obtain an updated control policy, and may send the updated control policy to the SMF network element. Then, the SMF network element may trigger policy control on data transmission of the UE based on the updated control policy and/or the updated local policy, and may send the fifth message to the UE.

It may be understood that "an implementation process of step 501 to step 503" may be replaced with "an implementation process of step 401 to step 406". Optionally, before the SMF network element sends the fifth message to the UE, the SMF network element may also send, to the PCF network element when the first energy consumption quota applied for by the SMF network element is greater than the energy consumption remaining quota corresponding to the UE, a message used to request a control policy. For example, the message may include that the first energy consumption quota applied for by the SMF network element is greater than the energy consumption remaining quota corresponding to the UE. Then, the PCF network element may determine, with reference to the local policy, whether policy control needs to be performed on data transmission of the UE. When determining, with reference to the local policy, that policy control needs to be performed on data transmission of the UE, the PCF network element may update an existing control policy to obtain an updated control policy, and may send the updated control policy to the SMF network element. Then, the SMF network element may trigger policy control on data transmission of the UE based on the updated control policy and/or the updated local policy, and may send the fifth message to the UE.

Optionally, after completing step 504, the UE may execute step 505 or execute steps 506 to 512. By executing step 505 or executing steps 506 to 512, direct control of the UE can be achieved based on the fifth message (for example, the fifth message includes the energy consumption quota usage status corresponding to the UE)). This allows for the adjustment of the UE's data transmission policy, which helps to reduce, to some extent, the impact of policy control on the amount of data transmitted by the UE. Furthermore, it enables users to instruct the network side to perform precise policy control according to their own wishes, thereby making policy control more personalized.

Step 505: The UE updates the data transmission policy of the application program according to the fifth message. Correspondingly, the SMF network element receives the third message from the UE.

Optional. For the implementation of step 505, refer to the relevant implementation methods of updating the data transmission policy of the application program in step 201 above. This will not be further elaborated here.

Step 506: The UE sends a third message to the SMF network element according to the fifth message. Correspondingly, the SMF network element receives the third message from the UE.

Optionally, for the implementation of step 506, reference may be made to the relevant implementation of step 201, in which the terminal device sends the third message to the first network element based on the third message. This will not be further elaborated here.

Step 508: The SMF network element sends a second message to the PCF network element based on the third message. Correspondingly, the PCF network element receives the second message from the SMF network element.

Optionally, for the implementation of step 507, reference may be made to the relevant implementation of step 201, in which the first network element sends the second message to the second network element based on the third message. This will not be further elaborated here.

Step 508: The PCF network element sends a control policy to the SMF network element. Correspondingly, the SMF network element receives the control policy from the PCF network element.

Optionally, for the implementation of step 508, reference may be made to the relevant implementation of step 305, which will not be further elaborated here.

Step 509: The SMF network element sends a first message to the RAN device according to the control policy. Correspondingly, the RAN device receives the first message from the SMF network element.

Optionally, for an implementation of step 510, reference may be made to the related implementation of step 307 above. This will not be further elaborated here.

Step 510: The RAN device transmits data of the UE according to a policy for reducing energy consumption of the RAN device for transmitting the UE's data.

Optionally, for an implementation of step 510, reference may be made to the related implementation of step 307 above. This will not be further elaborated here.

Step 511: When the RAN device needs to transmit data of the UE in a transmission manner that reduces energy consumption, the RAN device sends a response message to the SMF network element. Alternatively, when the RAN device does not need to transmit data of the UE in a transmission manner that reduces energy consumption, the RAN device sends a notification message to the SMF network element. Correspondingly, the SMF network element receives the response message or the notification message from the RAN device.

The above step 511 is an optional step.

Optionally, the implementation of step 511 may refer to the relevant implementation of step 308 above. This will not be further elaborated here.

From the above steps 501 to 511, it can be seen that by being based on the fifth message, it is possible to directly and effectively adjust the UE's data transmission policy. Alternatively, it is also possible to enable the user to indicate the network side to perform precise policy control according to the user's own will. This helps to make the policy control more personalized, which in turn helps to achieve direct control over the UE and, to a certain extent, ensures that the UE's data transmission volume is minimally affected.

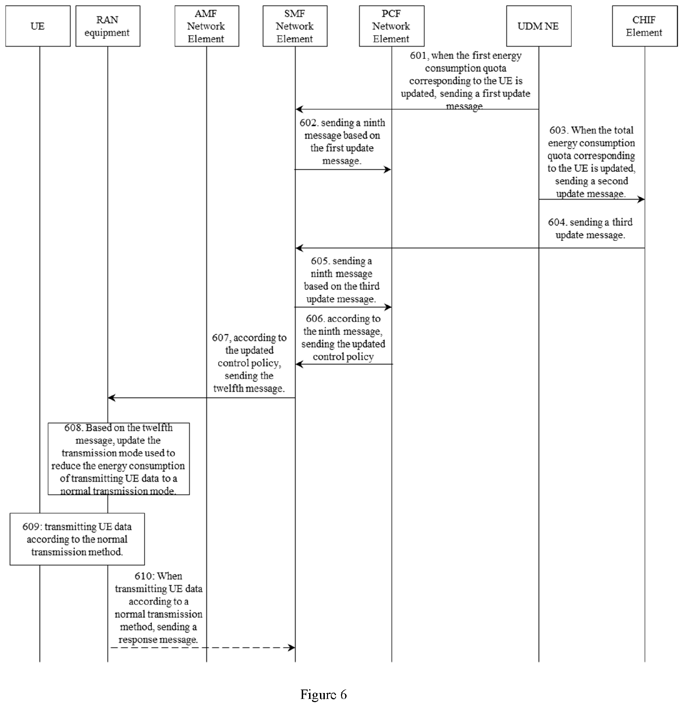

Based on the technical solution of the communication method illustrated in Figures 3 to 5 above, if the subscription information (for example, the first energy consumption quota or the total energy consumption quota) of the UE stored by the UDM network element changes, it may also trigger an update of the control policy corresponding to the UE. The following describes, with reference to Figure 6, the implementation process of updating the control policy corresponding to the UE.

Figure 6 is a schematic flowchart illustrating another communication method according to an embodiment of this application. As shown in Figure 6, the specific process of this method may include:

Step 601: When the first energy consumption quota corresponding to the UE of the UDM network element is updated, the UDM network element sends a first update message to the SMF network element. Correspondingly, the SMF network element receives the ninth message from the SMF network element.

Among them, the first update message may be used to indicate that the first energy consumption quota corresponding to the UE has been updated. The first update message may include the updated first energy consumption quota.

Step 602: The SMF network element sends a ninth message to the PCF network element based on the first update message. Correspondingly, the PCF network element receives the ninth message from the SMF network element.

Among them, the ninth message is used to request an update of the control policy. Optionally, the ninth message may include an energy consumption reason indicator, where the energy consumption reason indicator is used to indicate that the control policy is updated due to the energy consumption quota being relatively sufficient (i.e., the difference between the updated first energy consumption quota and the energy consumption for transmitting the data of the UE by the RAN device is greater than the first threshold).

Step 603: When the total energy consumption quota corresponding to the UE is updated, the UDM network element sends a second update message to the CHF network element. Correspondingly, the CHF network element receives the second update message from the UDM network element.

Among them, the second update message can be used to indicate that the total energy consumption quota corresponding to the UE has been updated. The second update message may include the updated total energy consumption quota.

Step 604: The CHF network element sends a third update message to the SMF network element. Correspondingly, the SMF network element receives the third update message from the CHF network element.

Among them, the third update message can be used to indicate that the total energy consumption quota corresponding to the UE has been updated. The third update message may include the updated total energy consumption quota.

In this embodiment of this application, the CHF network element may update the first energy consumption quota based on the updated total energy consumption quota, to obtain the updated first energy consumption quota.

For example, the CHF network element may determine the updated first energy consumption quota based on and in combination with the energy consumption configuration information used by the network side to transmit data of the first session. For example, the energy consumption quota configuration information may refer to a preconfigured ratio of the energy consumption quota used by the network side to transmit data of the first session to the total energy consumption quota.

Step 605: The SMF network element sends a ninth message to the PCF network element based on the third update message. Correspondingly, the PCF network element receives the ninth message from the SMF network element.

Optionally, for an implementation of step 605, reference may be made to the related implementation of step 602 above. This will not be further described here.

It should be understood that, in the case of performing step 601 to step 602 or performing step 603 to step 605, all of the subsequent steps 606 to step 610 may be triggered for execution.

Step 606: The PCF network element sends an updated control policy to the SMF network element based on the ninth message. Correspondingly, the SMF network element receives the updated control policy from the PCF network element.

It can be understood that the updated control policy corresponds to the updated first energy consumption quota.

Step 607: The SMF network element sends a twelfth message to the RAN device based on the updated control policy. Correspondingly, the RAN device receives the twelfth message from the SMF network element.

Among them, the twelfth message may be used to request adjusting the transmission mode (or may be referred to as a transmission mode or transmission policy) used by the RAN device to transmit data of the UE. Optionally, the twelfth message may include an energy consumption reason indicator, which is used to indicate that the control policy is updated due to the relatively sufficient energy consumption quota.

Step 608: The RAN device updates, based on the twelfth message, the transmission mode used to reduce the energy consumption of transmitting data of the UE to a common transmission mode.

For example, taking the transmission mode used to reduce the energy consumption of transmitting data of the UE as an energy-saving transmission mode (or may be referred to as an energy-saving transmission mode or an energy-saving transmission policy) as an example. The RAN device may update the transmission mode used to transmit data of the UE from the energy-saving transmission mode to a common transmission mode (or may be referred to as a common transmission mode or a common transmission policy or a normal transmission mode or a normal transmission mode or a normal transmission policy).

Step 609: The RAN device transmits the UE's data according to the normal transmission mode.

Step 610: When the RAN device transmits the UE's data according to the normal transmission mode, it sends a response message to the SMF network element. Accordingly, the SMF network element receives the response message from the RAN device.

The above step 610 is an optional step.

Among them, the response message is used to indicate that the RAN device transmits the UE's data according to the normal transmission mode. In other words, the RAN device adjusts the transmission mode used to transmit the UE's data.

From the above steps 601 to 610, it can be seen that when the subscription information of the UE (for example, the first energy consumption quota or the total energy consumption quota) changes, the message indicating that the energy consumption quota has changed is notified to the SMF network element. This allows the SMF network element to promptly request the PCF network element to update the control policy. In this way, the network side can implement more refined policy control over the UE's data transmission, so as to timely and effectively adjust the control policy corresponding to the UE.

It can be understood that the communication solutions shown in FIG. 3 to FIG. 6 may be separately implemented, or may also be implemented in combination. Specific limitations are not imposed. For example, the communication solutions shown in FIG. 3 to FIG. 5 may be implemented in combination with the communication solution shown in FIG. 6. In a possible implementation, the communication solution shown in FIG. 6 may be executed after all the steps of the communication solution shown in FIG. 3 or FIG. 4 or FIG. 5, or may be executed after some of the steps of the communication solution shown in FIG. 3 or FIG. 4 or FIG. 5. Similarly, some of the steps of the communication solution shown in FIG. 3 may also be implemented in combination with some of the steps of the communication solution shown in FIG. 4 or FIG. 5. Specific limitations are not imposed. In addition, the step numbering of the steps in each of the flowcharts described above in FIG. 3 to FIG. 6 is merely an example of executing a process, and does not constitute a limitation on the sequence of step execution. In various implementations of this application, there is no time sequence dependency relationship between steps that do not have a time sequence dependency relationship in various implementations of this application, and there is no strict execution sequence between them. In addition, the steps shown in the flowcharts are not all steps that must be performed. Some steps may be added or deleted based on actual needs.

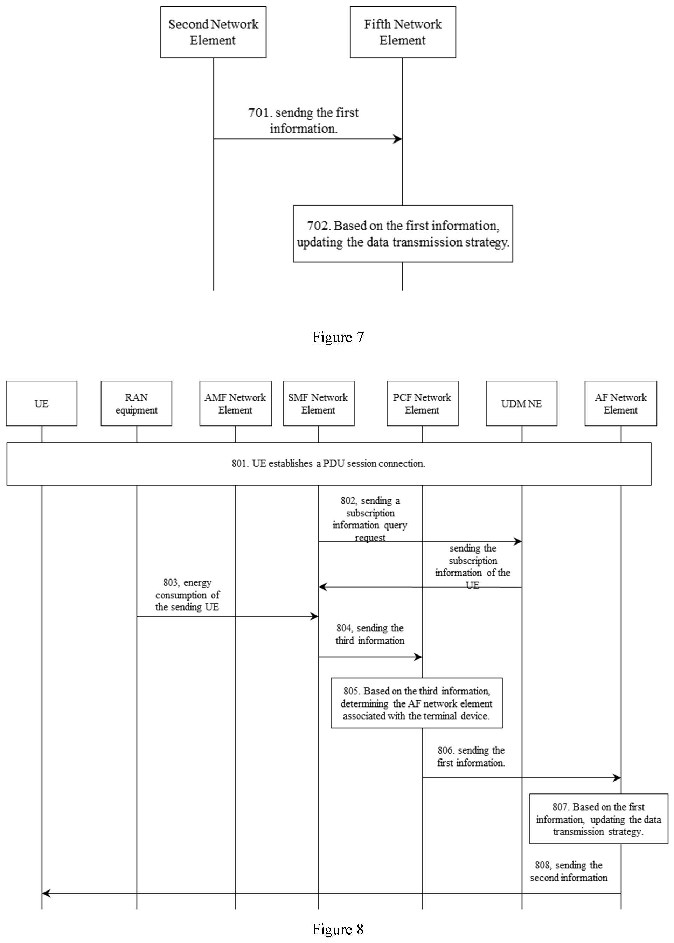

Figure 7 exemplarily shows a schematic flowchart of yet another communication method provided in an embodiment of this application. The method is applicable to the communication system architecture shown in Figure 1. As shown in Figure 7, the method includes:

Step 701: The second network element sends first information to the fifth network element. Correspondingly, the fifth network element receives the first information from the second network element.

Among them, the first information is used to indicate a relationship between the energy consumption of the network device for transmitting data of the terminal device and the first energy consumption quota corresponding to the terminal device. Optionally, in step 701, the relationship between the energy consumption of the network device for transmitting data of the terminal device and the first energy consumption quota corresponding to the terminal device may refer to the related descriptions in step 201 regarding the relationship between the energy consumption of the network device for transmitting data of the terminal device and the first energy consumption quota corresponding to the terminal device. This will not be further elaborated here.

For example, the first information may be carried (or carried) in a certain message. Optionally, the message may further include at least one of the following: a busy time/idle time calendar, a control policy corresponding to the terminal device, or an energy consumption reason indication, etc. Among them, the energy consumption reason indication is used to indicate that the control policy is updated due to an energy consumption reason (for example, a reason of insufficient energy consumption quota).

In the embodiments of this application, before sending the first information to the fifth network element, the second network element may receive third information from the first network element. The third information is used to request a control policy corresponding to the terminal device. The third information may include a relationship between the energy consumption of the network device used to transmit data of the terminal device and the first energy consumption quota corresponding to the terminal device. The second network element may determine session information associated with the terminal device based on the third information. Then, the second network element may determine the corresponding fifth network element based on the session information associated with the terminal device. After that, the second network element may send the first information to the fifth network element.

In a possible implementation, before sending the third information, the first network element may receive a sixth message from the network device and subscription information of the terminal device from the third network element. The subscription information of the terminal device includes the first energy consumption quota, and the sixth message is used to determine the energy consumption of the network device used to transmit data of the terminal device. Optionally, the subscription information of the terminal device may further include at least one of the following: an energy consumption quota of a session associated with the terminal device, or whether the terminal device supports policy control based on energy consumption, etc.

Afterwards, the first network element may determine the difference between the first energy consumption quota and the energy consumption, and compare the difference with the first threshold to determine whether it is necessary to request a control policy from the second network element. When the difference is less than or equal to the first threshold, the first network element may send third information to the second network element.

In another possible implementation, before sending the third information, the fifth network element may first send a seventh message to the fourth network element. The seventh message may be used to request the first energy consumption quota. For example, the seventh message may include an identifier of the first session. Afterwards, the fourth network element may send an eighth message to the first network element. The eighth message may be used to indicate that the first energy consumption quota is greater than the remaining energy consumption quota corresponding to the terminal device. Then, the first network element may send the third information to the second network element based on the eighth message.

Step 702: The fifth network element updates the data transmission policy based on the first information.

Among them, the data transmission policy is used to control the fifth network element to transmit data of the terminal device. For example, the data of the terminal device may be non-real-time downlink data (for example, background data transfer (background data transfer, BDT) data).

For example, the data transmission policy may include at least one of the following: updating the sending time of downlink data, adjusting the data synchronization time, or adjusting the streaming clarity of the cloud service. Optionally, when the message carrying the first information further includes a busy/idle time calendar, the fifth network element may determine, based on a relationship between the busy/idle time calendar and the energy consumption of the network device used to transmit data of the terminal device and the first energy consumption quota corresponding to the terminal device, the sending time of the downlink data or the data synchronization time, and specifically which time point the sending time or the data synchronization time is delayed to.

Optionally, after updating the data transmission policy, the fifth network element may also send the second information to the terminal device. The second information is used to indicate that the data transmission policy is updated due to an energy consumption reason (for example, a reason that the energy consumption quota is insufficient). Correspondingly, after receiving the second information, the terminal device may learn the reason for the network-side service change operation.

From the above steps 701 to step 702, it can be seen that, by updating the data transmission policy corresponding to the terminal device based on the relationship between the energy consumption of the network device used to transmit data of the terminal device and the first energy consumption quota corresponding to the terminal device, it can be achieved that the terminal device performs energy-saving control based on energy consumption, and it can be achieved that, to the greatest extent possible, the data transmission content and the data transmission volume corresponding to the terminal device are affected as little as possible. The terminal device performing energy-saving control based on energy consumption does not mean that the terminal device performs energy-saving control by itself, but rather that the network device performs energy-saving control in a manner of energy saving when transmitting the data of the terminal device.

Based on the technical solution of the communication method shown in FIG. 7, the following describes the communication method shown in FIG. 7 in detail by using a specific example shown in FIG. 8. In the specific example shown in FIG. 8, the terminal device is UE, the network device is a RAN device, the first network element is an SMF network element, the second network element is a PCF network element, the third network element is a UDM network element, the fourth network element is a CHF network element, and the fifth network element is an AF network element.

FIG. 8 is a schematic flowchart of still another communication method according to an embodiment of this application. As shown in FIG. 8, a specific procedure of the method may include the following steps.

Step 801: The UE establishes a PDU session connection.

Optionally, for a process in which the UE establishes a PDU session connection in step 801, refer to an existing process of establishing a PDU session connection. Details are not described herein again.

Step 802: The SMF network element sends a subscription information query request to the UDM network element. Correspondingly, the UDM network element receives the subscription information query request from the SMF network element.

Among them, the subscription information query request can be used to query the subscription information of the UE. For example, the subscription information query request may include the identifier of the UE.

It can be understood that the UDM network element may send the subscription information of the UE that is obtained through query to the SMF network element. Correspondingly, the SMF network element receives the subscription information of the UE from the UDM network element.

Among them, the subscription information of the UE may include the first energy consumption quota corresponding to the UE. Optionally, the subscription information of the terminal device may further include at least one of the following: an energy consumption quota of a session associated with the UE, or whether the UE supports policy control based on energy consumption, etc.

Step 803: The RAN device sends the energy consumption of the UE to the SMF network element. Correspondingly, the SMF network element receives the energy consumption of the UE from the RAN device.

It should be understood that there is no sequence relationship in the execution of step 802 and step 803. For example, step 802 may be performed before step 803, or may be performed after step 803, or may be performed in parallel with step 803.

Optionally, for an implementation of step 803, reference may be made to the implementation of step 303 above. This will not be further described here.

Step 804: The SMF network element sends third information to the PCF network element. Correspondingly, the PCF network element receives the third information from the SMF network element.

Among them, the third information is used to request a control policy corresponding to the UE. Optionally, the third information may include a relationship between the energy consumption of the RAN device for transmitting data of the UE and the first energy consumption quota corresponding to the UE.

For example, the relationship between the energy consumption of the RAN device for transmitting data of the UE and the first energy consumption quota corresponding to the UE, as included in the subscription information, may be exemplified by the case where the difference between the first energy consumption quota and the energy consumption is less than or equal to the first threshold. For the energy consumption of the UE reported each time by the RAN device, when the subscription information includes the first energy consumption quota, and the difference between the first energy consumption quota and the energy consumption of the UE reported each time is less than or equal to the first threshold, the SMF network element may send the third information to the PCF network element.

Step 805: The PCF network element determines, based on the third information, the AF network element associated with the terminal device.

In the embodiments of this application, the PCF network element may determine, based on the third information, session information associated with the UE. Then, the PCF network element may determine a corresponding AF network element based on the session information associated with the UE.

Step 806: The PCF network element sends the first information to the AF network element. Correspondingly, the AF network element receives the first information from the PCF network element.

Optionally, in step 806, for a related description of the first information, refer to the related description of the first information in step 701 above. Details are not described herein again.

Step 807: The AF network element updates the data transmission policy based on the first information.

Optionally, for an implementation of step 807, reference may be made to the related implementation of updating the data transmission policy in step 702 above. This will not be further elaborated here.

Step 808: The AF network element sends second information to the UE. Correspondingly, the UE receives the second information from the AF network element.

Step 808 above is an optional step.

Optionally, for an implementation of step 808, reference may be made to the related implementation of sending the second information in step 702 above. This will not be further elaborated here.

From the above steps 801 to 808, it can be seen that by updating the data transmission policy corresponding to the UE based on the relationship between the energy consumption of the RAN device used to transmit the UE's data and the first energy consumption quota corresponding to the UE, timely and effective energy-saving control can be performed on the UE without reducing the data transmission volume of the UE as much as possible.

It should be noted that, in the description of this application, "at least one" refers to one or more, and "a plurality of" refers to two or more. The term "and/or" describes an association relationship between associated objects and represents that three relationships may exist. For example, A and/or B may represent the following cases: A exists alone, A and B exist simultaneously, or B exists alone, where A and B may be singular or plural. The character "/" generally indicates that an association relationship between the objects before and after the "/" is an "or" relationship. "At least one of the following items (pieces)" or similar expressions refer to any combination of these items, including any combination of a single item (piece) or multiple items (pieces).

In addition, it should be noted that, in the foregoing embodiments, each step involved in each embodiment may be performed by a corresponding device, or may be performed by a component such as a chip, a processor, or a chip system within the device. This embodiment of this application does not constitute a limitation thereto. The foregoing embodiments are merely described by using an example in which the corresponding device performs the steps.

It should be noted that, in the foregoing embodiments, some steps may be selected for implementation, and a sequence of the steps in the figure may be adjusted for implementation. This application does not impose any limitation thereto. Some steps in the figure may be partially performed, the sequence of the steps may be adjusted, or the steps may be combined for implementation. All such implementations fall within the protection scope of this application.

It can be understood that, in order to implement the functions in the foregoing embodiments, the devices involved in the foregoing embodiments include a corresponding hardware structure and/or software module for performing each function. A person skilled in the art should easily be aware that, in combination with the embodiments disclosed in this application, the units and method steps of each example described in the embodiments can be implemented by hardware or a combination of hardware and computer software. A person skilled in the art should easily be aware that, in combination with the embodiments disclosed in this application, the units and method steps of each example described in the embodiments can be implemented by hardware or a combination of hardware and computer software. Whether a function is performed by hardware or computer software driving hardware depends on the particular application scenario and design constraints of the technical solution.

It should be understood that the "step" in this embodiment of this application is merely an example, and is a representation method used in this embodiment for better understanding, and does not constitute a substantial limitation on execution of the solutions in this application. For example, the "step" may alternatively be understood as a "feature". In addition, this step does not constitute any limitation on an execution sequence of the solutions in this application. Any new technical solution formed by performing an operation such as step sequence change, step combination, or step splitting that does not affect implementation of the entire solution based on the step does not fall within the scope disclosed in this application.

The following is a schematic structural diagram of a possible communications apparatus according to an embodiment of this application. These communications apparatuses may be configured to implement a function of the first network element, the second network element, the third network element, the fourth network element, the fifth network element, the network device, or the terminal device in the foregoing method embodiment, and therefore can also implement beneficial effects of the foregoing method embodiment.

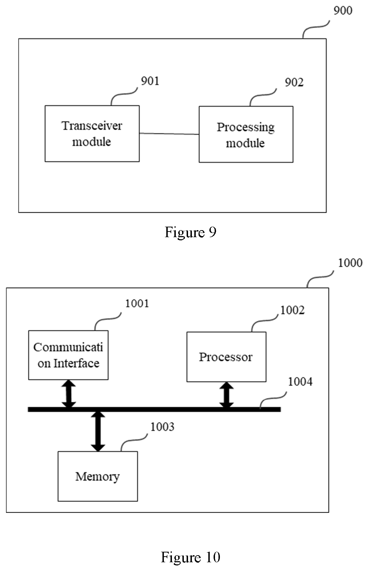

As shown in FIG. 9, the communications apparatus 900 includes a transceiver module 901 (or may be referred to as a communications module, a transceiver unit, or a communications unit, configured to send and receive data) and a processing module 902 (or may be referred to as a processing unit). The communications apparatus 900 is configured to implement a function of the first network element, the second network element, the third network element, the fourth network element, the fifth network element, the network device, or the terminal device in the method embodiments shown in FIG. 2 to FIG. 8.

Optionally, the transceiver module 901 may include a receiving module and/or a sending module. The receiving module may be configured to receive a signal (information or data, etc.) by the communication apparatus 900. The sending module may be configured to send a signal (information or data, etc.) by the communication apparatus 900. The sending module may send a signal (information or data, etc.) under the control of the processing module 902. The receiving module may receive a signal (information or data, etc.) under the control of the processing module 902.

When the communication apparatus 900 is configured to implement the functions of the first network element in the method embodiments shown in FIG. 2 to FIG. 8, the following is performed: The transceiver module 901 is configured to receive a control policy from a second network element. The control policy may be used to control the network device to transmit data of the terminal device. The control policy is determined based on a relationship between energy consumption of the network device used to transmit the data of the terminal device and a first energy consumption quota corresponding to the terminal device. The first energy consumption quota is used to indicate a maximum value of energy consumption allowed for the network device to transmit the data of the terminal device. The transceiver module 901 is further configured to send a first message to the network device according to the control policy. The first message may be used to request to reduce energy consumption of the network device used to transmit the data of the terminal device. The processing module 902 is configured to perform corresponding processing operations. For example, the processing module 902 is configured to calculate a difference between the first energy consumption quota and the energy consumption of the network device used to transmit the data of the terminal device in a certain time reported by the network device.

When the communications apparatus 900 is configured to implement a function of the second network element in the method embodiments shown in FIG. 2 to FIG. 8, the transceiver module 901 is configured to send a control policy to the first network element. The control policy may be used to control the network device to transmit data of the terminal device. The control policy is determined based on a relationship between energy consumption used by the network device to transmit data of the terminal device and the first energy consumption quota corresponding to the terminal device. The first energy consumption quota is used to indicate a maximum value of allowed energy consumption used by the network device to transmit data of the terminal device. The processing module 902 is configured to perform a corresponding processing operation, for example, update an existing control policy, to obtain an updated control policy.

When the communications apparatus 900 is configured to implement a function of the third network element in the method embodiments shown in FIG. 2 to FIG. 8, the transceiver module 901 is configured to send subscription information of the terminal device to the first network element or the fourth network element. The subscription information may include a first energy consumption quota or a total energy consumption quota. For example, the subscription information of the terminal device may further include whether the terminal device supports policy control based on energy consumption. a processing module 902, configured to perform a corresponding processing operation, for example, storing user data (for example, subscription information or authentication/authorization information).

When the communication apparatus 900 is configured to implement the function of the fourth network element in the method embodiments shown in FIG. 2 and FIG. 4 to FIG. 8: the transceiver module 901 is configured to receive a seventh message from the first network element. The seventh message may be used to request the network device to transmit the first session data of the terminal device according to the first energy consumption quota. The first energy consumption quota is used to indicate the maximum value of the energy consumption allowed for the network device to transmit the data of the first session. The transceiver module 901 is further configured to send an eighth message to the first network element. The eighth message may be used to indicate that the first energy consumption quota is greater than the energy consumption balance quota corresponding to the terminal device. The energy consumption balance quota is the total energy consumption quota corresponding to the terminal device minus the second energy consumption quota used by the network device to transmit the data of another session of the terminal device. The processing module 902 is configured to perform corresponding processing operations, for example, configured to calculate the energy consumption balance quota, or configured to determine whether the first energy consumption quota is greater than the energy consumption balance quota corresponding to the terminal device.

When the communication apparatus 900 is configured to implement the function of the fifth network element in the method embodiments shown in FIG. 7 to FIG. 8, the following is performed: The transceiver module 901 is configured to receive first information from a second network element. The first information is used to indicate a relationship between energy consumption of the network device for transmitting data of the terminal device and a first energy consumption quota corresponding to the terminal device. The processing module 902 is configured to update, based on the first information, a data transmission policy corresponding to the terminal device. The data transmission policy is used to control the fifth network element to transmit data of the terminal device.

When the communication apparatus 900 is configured to implement the function of the network device in the method embodiments shown in FIG. 2 to FIG. 6, the following is performed: The transceiver module 901 is configured to receive first information from a first network element. The first information may be used to request to reduce energy consumption of the network device for transmitting data of the terminal device and a first energy consumption quota corresponding to the terminal device. The processing module 902 is configured to transmit data of the terminal device based on a policy used to reduce energy consumption of the network device for transmitting data of the terminal device.

When the communications apparatus 900 is configured to implement functions of the terminal device in the method embodiments shown in FIG. 2 to FIG. 6, the transceiver module 901 is configured to receive a fifth message from a first network element. The fifth message may include a relationship between energy consumption used by the network device to transmit data of the terminal device and the first energy consumption quota corresponding to the terminal device. The first energy consumption quota is used to indicate a maximum value of allowed energy consumption used by the network device to transmit data of the terminal device. a processing module 902, configured to update a data transmission policy of an application program based on a relationship between energy consumption used by the network device to transmit data of the terminal device and the first energy consumption quota corresponding to the terminal device, or update the data transmission policy based on a relationship between energy consumption used by the network device to transmit data of the terminal device and the first energy consumption quota corresponding to the terminal device. sending the third message to the first network element. The third message may be used to instruct to update the control policy. The control policy may be used to control the network device to transmit data of the terminal device.

For more detailed descriptions of the transceiver module 901 and the processing module 902, refer to related descriptions in the method embodiments shown in FIG. 2 to FIG. 8. Details are not described herein again.

It should be understood that the transceiver module 901 in this embodiment of this application may be implemented by a communications interface or a circuit component related to the communications interface, and the processing module 902 may be implemented by a processor or a circuit component related to the processor.

It should be noted that the module division in the embodiments of this application is an example, and is merely logical function division. In actual implementation, there may be other division. In addition, functional units in the embodiments of this application may be integrated into one processing unit. Alternatively, two or more units may exist independently, or two or more units may be integrated into one unit. The integrated unit may be implemented in a form of hardware, or may be implemented in a form of a software functional unit.

If the integrated unit is implemented in a form of a software functional unit and is sold or used as an independent product, the integrated unit may be stored in a computer-readable storage medium. Based on such an understanding, the technical solutions of this application essentially, or a part that contributes to the prior art, or all or a part of the technical solutions may be embodied in a form of a software product, where the computer software product is stored in a storage medium. Several instructions are included to enable a computer device (which may be a personal computer, a server, or the like) or a processor (processor) to perform all or some of the steps of the methods in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

As another possible product form, as shown in FIG. 10, the communications apparatus 1000 includes: a communications interface 1001, and a processor 1002. Optionally, the communications apparatus 1000 further includes a memory 1003. The communications interface 1001, the processor 1002, and the memory 1003 are interconnected with each other. When the communications apparatus 1000 is configured to implement the technical solutions related to the first network element (or the second network element, the third network element, the fourth network element, the fifth network element, the network device, or the terminal device) in the foregoing embodiments, the communications interface 1001 may be configured to implement the functions of the transceiver module 901 when the transceiver module 901 performs the technical solutions related to the first network element (or the second network element, the third network element, the fourth network element, the fifth network element, the network device, or the terminal device) in the foregoing embodiments. The processor 1002 is configured to implement the functions of the processing module 902 when the processing module 902 performs the technical solutions related to the first network element (or the second network element, the third network element, the fourth network element, the fifth network element, the network device, or the terminal device) in the foregoing embodiments.

Optionally, the communication interface 1001, the processor 1002, and the memory 1003 are interconnected with each other through a bus 1004. The bus 1004 may be a peripheral component interconnect standard (peripheral component interconnect, PCI) bus, an extended industry standard architecture (extended industry standard architecture, EISA) bus, or the like. The bus may be classified into an address bus, a data bus, a control bus, and the like. For ease of representation, in FIG. 10, only one thick line is used for representation, but this does not mean that there is only one bus or only one type of bus.

The communication interface 1001 is configured to receive and send data. For example, when the communication apparatus 1000 is the UE shown in FIG. 1, the communication interface 1001 may implement communication with the RAN device shown in FIG. 1, or may implement communication with the AMF network element shown in FIG. 1, or may implement communication with another device (for example, another terminal device or a server) outside the communications system architecture shown in FIG. 1. In an example, the communication interface may be a transceiver apparatus integrated with a data receiving and sending function. In another example, the communication interface may alternatively be formed by a transmitter and a receiver, where the transmitter is configured to send data, and the receiver is configured to receive data.

Optionally, the communications interface 1001 may include a transmitter and/or a receiver. The transmitter is configured to transmit a signal, a message, information, data, or the like. The receiver is configured to receive a signal, a message, information, data, or the like. For example, the transmitter sends a signal, a message, information, data, or the like under control of the processor 1002. The receiver receives, under control of the processor 1002, a signal, a message, information, data, or the like.

For a function of the processor 1002, refer to descriptions of corresponding functions related to the first network element, the second network element, the third network element, the fourth network element, the fifth network element, the network device, or the terminal device in the foregoing embodiment. Details are not described herein again. The processor 1002 may be a central processing unit (central processing unit, CPU), a network processor (network processor, NP), a combination of a CPU and an NP, or the like. The processor 1002 may further include a hardware chip. The hardware chip may be an application-specific integrated circuit (application-specific integrated circuit, ASIC), a programmable logic device (programmable logic device, PLD), or a combination thereof. The foregoing PLD may be a complex programmable logic device (complex programmable logic device, CPLD), a field programmable gate array (field-programmable gate array, FPGA), a generic array logic (generic array logic, GAL), or any combination thereof. The processor 1002 may implement the foregoing functions by using hardware, or certainly, may also be implemented by executing corresponding software by hardware.

The memory 1003 is configured to store a program instruction and the like. Specifically, the program instruction may include program code, and the program code includes a computer operation instruction. The memory 1003 may include a random access memory (random access memory, RAM), and may further include a non-volatile memory (non-volatile memory), for example, at least one magnetic disk memory. The processor 1002 executes the program instruction stored in the memory 1003 to implement the foregoing function, so as to implement method steps that need to be performed by the first network element, the second network element, the third network element, the fourth network element, the fifth network element, the network device, or the terminal device in the foregoing embodiment.

Based on a same idea, an embodiment of this application further provides a communications system, where the communications system includes a plurality of communications apparatuses (for example, a plurality of the first network element, a second network element, a third network element, a fourth network element, a fifth network element, a network device, or a terminal device). The first network element may be configured to implement the technical solution related to the first network element in the foregoing embodiment. The second network element may be configured to implement the technical solution related to the second network element in the foregoing embodiment. The third network element may be configured to implement the technical solution related to the third network element in the foregoing embodiment. The fourth network element may be configured to implement the technical solution related to the fourth network element in the foregoing embodiment. The fifth network element may be configured to implement the technical solution related to the fifth network element in the foregoing embodiment. The network device may be configured to implement the technical solutions related to the network device in the foregoing embodiments. The terminal device may be configured to implement the technical solutions related to the terminal device in the foregoing embodiments.

Based on the same concept, the embodiments of this application further provide a computer program product. The computer program product includes a computer program or instructions. When the computer program or instructions are run on a computer, the computer is enabled to perform the method provided in the foregoing embodiments.

Based on the same concept, the embodiments of this application further provide a computer-readable storage medium. The computer-readable storage medium stores a computer program or instructions. When the computer program or instructions are executed by a computer, the computer is enabled to perform the method provided in the foregoing embodiments.

Among them, the storage medium may be any usable medium that can be accessed by a computer. For example, but not limited to: the computer-readable medium may include RAM, ROM, EEPROM, CD-ROM or other optical disc storage, magnetic disk storage medium or other magnetic storage devices, or any other medium that can be used to carry or store expected program code in a form of an instruction or a data structure and can be accessed by a computer.

Based on the same concept, the embodiments of this application further provide a chip. The chip may include a processor, and may further include a memory (or the chip is coupled to the memory). The chip executes program instructions in the memory, to perform the method provided in the foregoing embodiments. Herein, "coupling" refers to two components being directly or indirectly connected to each other. For example, coupling may refer to an electrical connection between two components.

Based on the same concept, the embodiments of this application further provide a chip system. The chip system includes a processor configured to support a computer apparatus in implementing the functions related to the communication apparatus (for example, a first network element, a second network element, a third network element, a fourth network element, a fifth network element, a network device, or a terminal device) in the foregoing embodiments. In a possible design, the chip system further includes a memory. The memory is configured to store necessary programs and data of the computer apparatus. The chip system may include a chip, or may include the chip and other discrete components.

All or some of the methods provided in the embodiments of this application may be implemented by using software, hardware, firmware, or any combination thereof. When implemented by using software, all or some of the applications may be implemented in a form of a computer program product. The computer program product comprises one or more computer instructions. When the computer instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer readable storage medium, or transmitted from one computer readable storage medium to another computer readable storage medium, for example, the computer instructions may be wired from a website site, computer, server, or data center (e.g., coaxial cable, optical fiber, digital subscriber line (DSL)) or wireless (e.g., infrared, wireless, microwave) transmission to another website site, computer, server, or data center. The computer-readable storage medium may be any usable medium accessible by a computer, or a data storage device such as a server or a data center that integrates one or more usable media. The usable medium may be a magnetic medium (e.g., a floppy disk, a hard disk, a magnetic tape), an optical medium (e.g., a high-density digital video disc (DVD)), or a semiconductor medium (for example, a solid state drive (solid state drive, SSD)), and the like.

The steps of the method described in the embodiments of this application may be directly embedded in hardware, executed by a processor in a software unit, or a combination of both. The software unit may be stored in a RAM, ROM, EEPROM, register, hard disk, removable disk, CD-ROM, or any other form of storage medium in the art. For example, the storage medium may be connected to the processor, so that the processor can read information from the storage medium, and can write information into the storage medium. Optionally, the storage medium may be further integrated into the processor. The processor and the storage medium may be disposed in an ASIC.

This application is described with reference to a flowchart and/or a block diagram of a method, a device (system), and a computer program product according to this application. It should be understood that each process and/or block in the flowchart and/or block diagram may be implemented by computer program instructions. The computer program instructions may be provided to a general-purpose computer, a dedicated computer, an embedded processor, or another programmable data processing device's processor to generate a machine, so that the instructions executed by a computer or another programmable data processing device's processor generate an apparatus for implementing a specific function in one process or a plurality of processes in the flowchart and/or a specific function in one block or a plurality of blocks in the block diagram.

These computer program instructions may also be loaded onto a computer or other programmable data processing device, so that a series of operational steps are performed on the computer or other programmable devices to produce computer-implemented processing. Thus, the instructions executed on the computer or other programmable devices provide steps for implementing the functions specified in one or more processes of a flowchart and/or one or more blocks of a block diagram.

Obviously, a person skilled in the art can make various modifications and variations to this application without departing from the spirit and scope of this application. In this way, if these modifications and variations of this application fall within the scope of the claims of this application and their equivalent technologies, this application is also intended to include these modifications and variations.

## Claims

1. A communication method, wherein the method is applied to a first network element, and the method comprises:
receiving a control policy from a second network element, wherein the control policy is used to control a network device to transmit data of a terminal device, and the control policy is determined based on a relationship between energy consumption of the network device for transmitting the data and a first energy consumption quota corresponding to the terminal device, wherein the first energy consumption quota indicates a maximum value of energy consumption allowed for the network device to transmit the data;
according to the control policy, a first message is sent to the network device, the first message is used to request a reduction in the energy consumption of the network device for transmitting the data.

2. The method according to claim 1, wherein before receiving the control policy from the second network element, the method further comprises:
based on the relationship between the energy consumption of the network device for transmitting the data and the first energy consumption quota corresponding to the terminal device, sending a second message to the second network element, the second message is used to request the control policy.

3. The method according to claim 2, wherein the sending a second message to the second network element comprises:
when the subscription information of the terminal device indicates that the terminal device supports policy control based on energy consumption, the second message is sent to the second network element.

4. The method according to claim 2 or 3, wherein before sending the second message to the second network element, the method further comprises:
receiving a third message from the terminal device, wherein the third message is used to indicate an update of the control policy by the terminal device.

5. The method according to claim 4, wherein before receiving the third message from the terminal device, the method further comprises:
receiving a fourth message from a network device, wherein the fourth message is used to determine the energy consumption of the network device for transmitting the data;
according to the fourth message, sending a fifth message to the terminal device, wherein the fifth message comprises a relationship between the energy consumption of the network device for transmitting the data of the terminal device and the first energy consumption quota corresponding to the terminal device.

6. The method according to any one of claims 1 to 5, wherein a relationship between the energy consumption of the network device for transmitting the data and the first energy consumption quota corresponding to the terminal device comprises:
the difference between the first energy consumption quota and the energy consumption is less than or equal to a first threshold.

7. The method according to claim 6, wherein the method further comprises:
receiving subscription information of the terminal device from a third network element, wherein the subscription information comprises the first energy consumption quota.

8. The method according to claim 6 or 7, wherein the method further comprises:
receiving a sixth message from the network device, wherein the sixth message is used to determine the energy consumption of the network device for transmitting the data.

9. The method according to any one of claims 1 to 5, wherein the method further comprises:
the first energy consumption quota is greater than the remaining energy consumption quota corresponding to the terminal device, wherein the remaining energy consumption quota is obtained by subtracting the second energy consumption quota used by the network device to transmit data of another session of the terminal device from the total energy consumption quota corresponding to the terminal device.

10. The method according to claim 9, wherein the method further comprises:
sending a seventh message to the fourth network element, wherein the seventh message is used to request the first energy consumption quota;
receiving an eighth message from the fourth network element, wherein the eighth message is used to indicate that the first energy consumption quota is greater than the remaining energy consumption quota corresponding to the terminal device.

11. The method according to any one of claims 1 to 10, wherein the method further comprises:
receiving the updated first energy consumption quota;
according to the updated first energy consumption quota, send a ninth message to the second network element, wherein the ninth message is used to request an update of the control policy.

12. The method according to any one of claims 1 to 11, wherein the control policy comprises a policy for reducing energy consumption of the network device used for transmitting the data.

13. The method according to claim 12, wherein the policy comprises at least one of the following methods: reducing the transmission power used by the network device to transmit the data, reducing the modulation complexity used by the network device to transmit the data, reducing the number of retransmissions used by the network device to transmit the data, reducing the transmission speed used by the network device to transmit the data, or updating the radio bearer used by the network device to transmit the data.

14. The method according to any one of claims 1 to 13, wherein the data is user plane data of the terminal device.

15. A communication method, wherein the method is applied to a fourth network element, and the method comprises:
receiving a seventh message from a first network element, wherein the seventh message is used to request a first energy consumption quota for the network device to transmit data of a first session of the terminal device, wherein the first energy consumption quota indicates a maximum value of energy consumption allowed for the network device to transmit the data of the first session;
sending an eighth message to the first network element, wherein the eighth message is used to indicate that the first energy consumption quota is greater than the remaining energy consumption quota corresponding to the terminal device, wherein the remaining energy consumption quota is the total energy consumption quota corresponding to the terminal device minus the second energy consumption quota used by the network device to transmit data of another session of the terminal device.

16. The method according to claim 15, wherein the method further comprises:
sending a tenth message to a third network element, wherein the tenth message is used to query subscription information of the terminal device;
receiving subscription information of the terminal device from the third network element, wherein the subscription information comprises a total energy consumption quota corresponding to the terminal device.

17. The method according to claim 15 or 16, wherein the method further comprises:
receive the updated total energy consumption quota of the total energy consumption quota from a third network element;
updating the first energy consumption quota based on the updated total energy consumption quota;
sending the updated first energy consumption quota to the first network element.

18. A communication method, wherein the method is applied to a terminal device, and the method comprises:
receiving a fifth message from a first network element, wherein the fifth message includes a relationship between energy consumption of the network device used to transmit data of the terminal device and a first energy consumption quota corresponding to the terminal device, wherein the first energy consumption quota represents a maximum value of energy consumption allowed for the network device to transmit the data;
based on the relationship between the energy consumption of the network device used to transmit the data of the terminal device and the first energy consumption quota corresponding to the terminal device, updating the data transmission policy of the application program; or,
according to the relationship between the energy consumption of the network device used to transmit the data of the terminal device and the first energy consumption quota corresponding to the terminal device, sending a third message to the first network element, the third message is used to indicate an update of a control policy, wherein the control policy is used to control the network device to transmit the data of the terminal device.

19. The method according to claim 18, wherein the relationship between the energy consumption of the network device used to transmit the data of the terminal device and the first energy consumption quota corresponding to the terminal device comprises: a difference between the first energy consumption quota and the energy consumption is less than or equal to a first threshold; or,
the data is the data of the first session of the terminal device, and the relationship between the energy consumption of the network device used to transmit the data of the terminal device and the first energy consumption quota corresponding to the terminal device includes: the first energy consumption quota is greater than the energy consumption balance quota corresponding to the terminal device, wherein the energy consumption balance quota is a total energy consumption quota corresponding to the terminal device minus a second energy consumption quota corresponding to the terminal device and used by the network device to transmit the data of other sessions of the terminal device.

20. The method according to claim 18 or 19, wherein the data transmission policy comprises at least one of the following methods: postponing the automatic update time of the application program, or postponing the data synchronization time between the application program and the cloud.

21. The method according to any one of claims 18 to 20, wherein the control policy comprises a policy for reducing energy consumption of the network device used to transmit data of the terminal device.

22. The method according to claim 21, wherein the policy comprises at least one of the following methods: reducing transmission power of the network device used to transmit data of the terminal device, reducing modulation complexity of the network device used to transmit data of the terminal device, reducing a quantity of retransmissions of the network device used to transmit data of the terminal device, reducing a transmission speed of the network device used to transmit data of the terminal device, or updating a data radio bearer of the network device used to transmit data of the terminal device.

23. The method according to any one of claims 18 to 22, wherein the data is user plane data of the terminal device.

24. A communications apparatus, comprising a module or unit configured to perform the method according to any one of claims 1 to 14, or a module or unit configured to perform the method according to any one of claims 15 to 17, or a module or unit configured to perform the method according to any one of claims 18 to 23.

25. A communications apparatus, comprising:
a communications interface, configured to receive and send data;
a memory, configured to store computer program instructions and data;
a processor, configured to execute by calling the computer program instructions and data in the memory, so that the method according to any one of claims 1-14 is performed, or the method according to any one of claims 15-17 is performed, or the method according to any one of claims 18-23 is performed.

26. A communication system, **characterized in that** it comprises a first network element and a second network element;
the first network element is configured to perform the method according to any one of claims 1-14;
the second network element is configured to send a control policy.

27. The communication system according to claim 26, **characterized in that** the communication system further comprises a network device;
the network device is configured to receive a first message from the first network element, wherein the first message is used to request to reduce energy consumption used by the network device to transmit data of a terminal device; and;
the network device is further configured to transmit the data of the terminal device according to a policy used to reduce energy consumption used by the network device to transmit the data of the terminal device.

28. A computer readable storage medium, wherein the computer readable storage medium stores a computer program or instruction, and when the computer program or instruction is executed by a computer, so that the computer performs the method according to any one of claims 1 to 14, the method according to any one of claims 15 to 17, or the method according to any one of claims 18 to 23.

29. A computer program product, wherein the computer program product comprises a computer program or instruction, and when the computer program or instruction runs on a computer, so that the computer performs the method according to any one of claims 1 to 14, the method according to any one of claims 15 to 17, or the method according to any one of claims 18 to 23.
